# EUROPEAN PATENT SPECIFICATION

(11) **EP 4 421 343 B1**
(45) Date of publication and mention of the grant of the patent: **16.09.2026**
(21) Application number: 23204500.5
(22) Date of filing: 18.10.2023
(51) Int. Cl.: F16D 41/12

(54) **ONE TURN COUPLING**
EIN-UMDREHUNGS-KUPPLUNG
ACCOUPLEMENT À UN TOUR

(30) Priority: 19.10.2022 GB 202215449
(43) Date of publication of application: 28.08.2024
(73) Proprietor: Kuhn-Geldrop B.V., 5667 KP Geldrop (NL)
(72) Inventor: VAN GESTEL, Niels Henricus Maria, 5275 LG DEN DUNGEN (NL); VAESSEN, Sjir Hendrik Margo, 5652 RG EINDHOVEN (NL); AKKERMANS, Dionisius Cornelis Maria, 4707 PE ROOSENDAAL (NL)
(74) Representative: Murgitroyd & Company

(56) References cited:
- DE-T5- 112015 004 085
- US-A- 4 458 795
- US-A1- 2011 269 587
- US-A1- 2019 133 046
- US-B2- 10 426 096
- US-B2- 10 701 866
- US-B2- 7 374 031

## Description

The invention relates to a one turn coupling, a coupling for a baler, a square baler including the one turn coupling, a method for operating an agricultural baler, and a method for operating a one turn coupling.

A one turn coupling, which is a type of clutch, is a drive transfer device that is configured to transfer a rotational drive intermittently when activated. For example, the one turn coupling may be configured to transfer a rotational drive from a continuously rotating input shaft to an output shaft for a single turn of the output shaft, i.e. through a rotation of the output shaft through 360°, each time it is activated or not deactivated.

One turn couplings are widely known. However, many known one turn couplings are complex and require many parts. For example, US2869697 discloses a transmission clutch that is arranged to drive positively in one direction only. The system includes a driving member comprising a hub 2, a sliding collar 12, a driven member comprising a pinion 20 and a control wheel 36 mounted on the hub 2. The clutch includes a pivotable pawl 46 that is arranged to interact with ratchet teeth 42 on the control wheel to control operation of the clutch. However, the system is overly complex because the locking pawl is arranged to act on the control wheel 36, which in turn interacts with the pinion 20.

It is an object of the invention to provide a one turn coupling that is simple and requires fewer parts than some known one turn couplings. It is an object of the invention to provide a coupling for a baler. It is an object of the invention to provide a method of operating a one turn coupling.

The one turn coupling may be for example (but not exclusively) used on a baling machine, such as a square baler for example as described in patent application number GB2212003.4, to control the operation of a component of the machine, such as a feeding fork or a knotter device.

The phrase "square baler" as used herein refers to a baler with reciprocating plunger that compresses bale material in an elongate compression chamber to form a parallelepiped bale (generally called a "square bale"). Square balers of this general type are well known, examples being described in EP0870425, EP1284594 and EP3078257. This type of square baler is typically used for baling agricultural crop material, for example grass, straw etc, although it may also be used for baling non-agricultural materials.

In a typical agricultural square baler the bale material is picked up from the windrows in a field by a pick-up mechanism and optionally may be transported and cut by a rotor before being deposited and partially compressed by the feeding system in a prechamber/feeding duct. The feeding duct temporarily stores the gathered and partially compressed bale material. When a sufficient quantity of bale material has been gathered and when the reciprocating plunger is in the retracted position the feeding system brings the gathered and pre-compacted bale material from the feeding duct into the compression chamber in front of the plunger. The plunger then moves forward into the compression chamber, compacts the bale material and simultaneously shifts the compressed mass of bale material further along the compression chamber. When a sufficient quantity of bale material has been compressed in the compression chamber, twine loops are passed around the bale material and tied to keep the material under compression and to form a square bale. The completed bale leaves the bale chamber at the end of the compression channel by the continuous forward shifting of newly formed bales in the compression chamber.

A feature of the feeding systems described in GB2212003.4 is that the feeding mechanism can perform:
A. one or more loading strokes in which the bale material is forwarded from the entrance of the feeding duct towards the exit of the feeding duct, whereby it pre-compresses the bale material in the feeding duct, and
B. a feeding stroke whereby the pre-compressed bale material is transferred from the feeding duct into the compression chamber.

Typically the feeding system runs at two or more times the rate of the plunger, so that there will always be at least one loading stroke between successive feeding strokes. A feeding stroke will be performed only when a sufficient quantity of bale material is sensed in the feeding duct. The square baler typically includes a sensor, such as a trip plate in or adjacent the feed duct, which is arranged to determine when a sufficient quantity of bale material is present in the feed duct to perform a feeding stroke. If a sufficient quantity of bale material is not sensed in the feeding duct, another loading stroke will be performed to load more bale material into the feeding duct.

The feeding system and the plunger are synchronised so that the feeding system will only feed bale material from the feeding duct into the compression chamber when the reciprocating plunger is in the retracted position. If the plunger is not in the retracted position the feeding system will continue to perform the loading cycle until the plunger reaches the retracted position.

The materials to be baled may have very different and variable properties, including for example friction, elasticity, and specific mass. As a result, the shape of the portion of pre-compressed bale material transferred from the feeding duct into the compression chamber can be unpredictable and non-uniform. This can affect the shape of the bale, resulting in unsatisfactory non-uniform or oddly-shaped bales.

At least one technical problem with which the present invention is concerned relates to the reliable formation of uniform parallelopiped bales for a range of bale materials having different and variable properties.

Use of a one turn coupling in the context of a square baler such as disclosed in GB2212003.4 can help to provide consistent well-formed bales by helping to control operation of the feeding fork to undertake loading and feeding strokes.

A known clutch is disclosed in US7374031.

It is an object of the present invention to provide a baler that resolves or at least mitigates one or more of the aforesaid problems. It is an object of the invention to provide a method for operating a baler.

According to one aspect of the invention, there is provided a one turn coupling according to claim 1. The invention provides a one turn coupling that has a relatively simple structure and that is relatively easy to operate and control, for example for use in a square baler to control operation of a feeding fork.

The driving part and/or the driven part can be arranged to move axially along the common axis, thereby enabling the driving part and the driven part to move into and out of engagement with one another.

The one turn coupling can include a shaft.

The driving part can be mounted on the shaft. The driving part can be rotatably mounted on the shaft, for example by bearings.

The driven part can be mounted on the shaft. The driven part can be fixed for rotation with the shaft, for example the driven part can be splined to the shaft. The driven part can be arranged to move axially along the shaft.

The arrangement can be such that the driving part and driven part are arranged to drivingly disengage, rotate relative to one another through one turn and to drivingly re-engage. This provides a one turn coupling function.

The one turn coupling can include biassing means, such as at least one spring, to bias the driving part and/or the driven part towards driving engagement. In a condition wherein the control element engages the decoupling formation, the driven part and the driving part can be disengaged against the bias of the biassing means. In a condition wherein the control element disengages the decoupling formation, the biassing means can bias the driving part and/or driven part towards driving engagement. In some embodiments, the driven part can be biased towards the driving part.

The control element can be movable translationally. The control element can be arranged to move axially relative to the common axis. For example, the pawl can be movable axially along the pivot axis, thereby moving axially relative to the common axis. This enables the pawl to push the driving part and the driven part apart.

Cooperating contact surfaces of the decoupling formation and the cam element can have helical surfaces. This reduces wear. For example, the helical contact surfaces can extend in a direction around the common axis of the coupling. For embodiments having helical contact surfaces, for example, similar to the thread of a screw/bolt, if the pawl slides against the decoupling formation there will constantly be surface-to-surface contact between the cam and the decoupling formation. By contrast, if the contact surfaces were for instance flat, there would be surface-to-surface contact in only one angular position of the driving/driven part, which ever includes the decoupling formation, but in other angular positions there would be a line or point contact. This can lead to extreme wear.

One of the driving part and the driven part can comprise the decoupling formation. In some embodiments, the driving part includes the decoupling formation. When disengaging the one turn coupling, the other one of the driving part and the driven part can be arranged to move away from the part including the decoupling formation. The moving part can comprise a collar against which the pawl can rest. The collar provides a relatively large and thus stable surface for the force acting on the moving part to impart a stable and secure movement of the shifting of the moving part.

The decoupling formation can include a sloped surface and the cam element can be arranged to engage the sloped surface to generate a force acting on the driving part and/or driven part generally in an axial direction of the common axis.

The sloped surface of the decoupling formation can face towards a first rotational direction of the driving part and/or the driven part. As the driving part and/or driven part rotates, and the control element is located at an engagement position, the sloped surface rotates into engagement with the cam, thereby generating the axial force, which separates the driving and driven parts. The sloped surface can comprise a helical surface.

The driving part can include at least one drive element and at least one recess. The driven part can include at least one drive element and at least one drive recess. In a condition wherein the driving part drivingly engages the driven part, the driving part drive element can be seated in the driven part drive recess and drivingly engages the driven part drive element.

The driving part can include a main body. The main body can be generally annular. The at least one drive element can protrude from a planar side of the main body in a generally axial direction.

The driven part can include a main body. The main body can be generally annular. The at least one drive element can protrude from a planar side of the main body in a generally axial direction.

The driving part can include a plurality of drive elements and a plurality of recesses. The driven part can include a plurality of drive elements and a plurality of drive recesses. Each driving part drive element can be seated in a respective one of the driven part drive recesses when the driving part drivingly engages the driven part. Each driven part drive element can be seated in a respective one of the driving part recesses when the driving part drivingly engages the driven part.

The driving part and the driven part can have irregular arrangements, such that the driving part and the driven part drivingly engage in only one rotational orientation of the driving part and driven part. The driven part can be biased towards the driving part and can automatically drivingly engage the driving part in a condition wherein the one rotational orientation of the driving part and driven part occurs. For example, the driving part drive elements and/or the driven part drive elements can be arranged irregularly, such that the driving part drive elements are able to drivingly engage the driven part drive elements in only one rotational orientation of the driving part and driven part. Accordingly, if the driving part engages the driven part at any other relative rotational orientation between the driving part and the driven part, the driving part continues to rotate relative to the driven part until drive elements of the driving part are properly rotationally aligned with the drive elements of the driven part to allow driving engagement between the driving part and the driven part. This helps to ensure that the clutch functions as a one turn coupling.

The one turn coupling can comprise a locking element which is arranged to selectively rotationally lock the driven part to the driving part. The locking element can be arranged to eliminate backlash between the driving part and the driven part when the driven part is drivingly engaged with the driving part, for example due to a negative turning moment. This provides more precise driving of the driven part by the driving part.

The one turn coupling can include biasing means, for example in the form of a resilient element such as a spring, to bias the locking element towards rotationally locking the driven part to the driving part.

The locking element can comprise a retractable pin. The pin can be retractable into a recess. The biassing means can be located in the recess and can be arranged to bias the pin towards the driven part or the driving part.

The locking element can be arranged to move between a non-locking position wherein the driven part is rotatable relative to the driving part, and a locking position wherein the driving part is locked for rotation with the driven part. The locking element can be arranged to move in a generally axial direction between the locking and non-locking positions, for example along an axis that is parallel to the common axis.

The locking element can be mounted on one of the driven part and the driving part. The other one of the driven part and the driving part can include a locking formation, such as a recess, that can be arranged to receive the locking element. The recess can be formed in the drive element.

In some embodiments, the one turn coupling can include a plurality of locking elements. In some embodiments, the one turn coupling can include a plurality of locking formations. Each locking element can be arranged to engage a respective one of the locking formations. Each locking formation can comprise a recess formed in a respective one of the driving elements. In some embodiments, the locking elements can be mounted on the driven part and the locking formations can be mounted on the driving part.

The one turn coupling can include a braking device arranged to arrest rotation of the driven part. The braking device can be arranged to arrest rotation of the driven part in a condition wherein the driven part is disengaged from the driving part, or in the process of disengaging from the driving part.

The braking device can include a first part that does not rotate and a second part that is rotatable relative to the first part.

The driven part can be arranged to move axially to drivingly engage the second part of the braking device.

The braking device can be resiliently mounted on/in the housing for the one turn coupling. The braking device can be mounted about the common axis. The driven part can have a longitudinal position on the common axis between the driving part and the braking device.

The driven part can include at least one braking element and at least one brake recess. The brake device can include at least one braking element and at least one recess. In a condition wherein the driven part fully engages the brake device, the driven part brake element can be seated in the brake device recess and the brake device brake element can be seated in the driven part brake recess.

In some scenarios, the driven part may engage the braking device while still driven by the driving part. For example, in the process of disengaging the driven part from the driving part, the driven part driving elements can engage the driving part driving elements while the driven part brake elements are located within the braking device recesses. That is, in some embodiments, the driven part does not have an entirely neutral position where it is not in engagement with either of the driving part and the braking device. Not having an entirely neutral position of the driven part ensures stopping of the driven part and subsequently of a crank, such as a crank used in a baler to control operation of a feeding fork, at the required position.

In some embodiments, the driven part is arranged to move towards the braking device while the driven part braking elements rotate relative to the braking device within the braking device recesses.

In some embodiments, end faces of the driven part braking elements can reach bottom faces of the braking device recesses after full dis-engagement of the driving elements of the driven part with the driving elements of the driving part.

In some embodiments, before the driving elements of the driven part and the driving elements of the driving part fully release each other, end faces of the braking elements of the driven part can reach bottom faces of the braking device recesses.

In some embodiments, end faces of the driven part braking elements push the braking device in the longitudinal direction along the common axis before the braking elements of the driven part and the braking elements of the brake device engage each other. In this arrangement a resilient element, which biases the braking device to return to its original longitudinal position on the common axis, is loaded. This arrangement helps to ensure that the complete braking element surfaces are used when braking, thereby reducing wear. If only part of the braking element surfaces are used during braking it would lead to excessive wear of the braking elements.

In some embodiments, when the driven part is fully released from the driving part, the braking device has moved along the common axis against the resilient element. The end faces of the braking elements of the driven part are engaged with the bottom faces of the braking device recesses, but the braking elements of the driven part have not yet engaged the braking elements of the braking device, thus the driven part is not fully braked yet. This engagement of the driven part by the brake device before the driven part is fully disengaged from the driving part is to ensure correct stopping of the driven part at the required angular position and helps to ensure proper functioning of the one turn coupling.

Eventually the braking elements of the driven part engage with the braking elements of the braking device since the mass-inertia of the driven part (rotational movement) rotates each driven part braking element against its respective braking device braking element.

In order for oil in the gearbox housing not to dampen this movement and to help ensure correct stopping of the driven part at the required angular orientation, in some embodiments the braking device braking elements have a lower height compared to the driven part brake elements, so a channel where oil can escape is created when the driven part is fully engaged with the braking device. This situation is not an overrun condition, but rather it provides enough time for the braking device to catch the driven part and at the same time it does not allow the possibility that the driven part is free to rotate relative to the braking device and driving part simultaneously. The braking device recesses are formed sufficiently large so that catching of the driven part braking elements is possible. In some embodiments, the one turn coupling can have an overrun condition.

In the overrun condition the braking device and/or the driven part can be arranged to separate, for example against a biasing element such as a spring. The biassing element is arranged to bias the braking device towards the driven part. In some embodiments, in the overrun condition, the braking device is arranged to move axially away from the driven part. This typically occurs when the torque applied to the braking device by the driven part is sufficiently large to overcome the resiliency of the biasing element, which biases the braking device towards the driving part.

The braking device can include a first part that does not rotate, for example because it is rotationally fixed to a frame member or housing. The braking device can include a second part that rotates relative to the first part. The driven part can be arranged to move axially into engagement with the second part of the braking device. The pawl can be arranged to move the driven part axially along the common axis into engagement with the second part of the braking device. The first and/or second parts of the braking device can be arranged coaxially with the driving part and/or the driven part.

The driven part braking element can be mounted on an opposite side of the driven part from the driving element. The second part of the braking device can include the braking device braking element. The braking element of the second part of the braking device can be located on a face of the second part that faces towards the driven part. The braking element of the driven part can be arranged to selectively drivingly engage with the braking element of the second part of the braking device to arrest rotation of the driven part. The driven part brake recess can be mounted on an opposite side of the driven part from the driving element. The second part of the braking device include the braking device recess. The recess of the second part of the braking device can be located on the face of the second part that faces towards the driven part. In a condition wherein the driven part engages the second part of the braking device, the braking element of the driven part enters into the recess on the second part of the braking device, and the braking element on the second part of the braking device enters into the brake recess of the driven part.

In some embodiments, the one turn coupling can be arranged such that the driving element of the driven part is located in a driving part recess whilst simultaneously the braking element of the driven part is located in the recess of the second part of the braking device, for example when transitioning from a driving, condition wherein the driven part driving element engages the driving part driving element, to a braking condition, wherein the driven part braking element engages the braking device braking element. In this manner, the driven part, the driving part and the braking device are arranged such that the driven part always remains in contact with the driving part and/or the braking part.

The driven part can include a plurality of braking elements. The driven part braking elements can be mounted on an opposite side of the driven part from the driving element. The second part of the braking device can include a plurality of braking elements. The braking elements of the second part of the braking device can be located on the face of the second part that faces towards the driven part. The braking elements of the driven part can be arranged to selectively drivingly engage with the braking elements of the second part of the braking device to arrest rotation of the driven part.

The driven part can include a plurality of brake recesses. The driven part brake recesses can be mounted on the opposite side of the driven part from the driving elements. The second part of the braking device can include a plurality of recesses. The recesses of the second part of the braking device can be located on the face of the second part that faces towards the driven part. In a condition wherein the driven part engages the second part of the braking device, each braking element of the driven part enters into a respective one of the recesses on the second part of the braking device, and each braking element on the second part of the braking device enters into a respective one of the brake recesses of the driven part.

In some embodiments, during a process of disengagement of the one turn coupling wherein the one turn coupling transitions from the driving condition to the braking condition, the relative angular orientations of the driving part, the driven part and the second part of the braking device can be arranged such that the driving part driving elements are rotationally aligned with the driven part driving recesses, the driven part driving elements are rotationally aligned with the driving part recesses, the driven part braking elements are rotationally aligned with the braking device recesses, and the braking device braking elements are rotationally aligned with the driven part braking recesses. This is to help ensure that dis-engagement of the one turn coupling is done quickly and smoothly. The arrangement also helps to ensure correct stopping of the driven part at the required moment and required position.

The overrun condition can be a condition wherein the driven part is arranged to move rotationally relative to the braking device by the braking elements of the driven part sliding over the braking elements of the braking device.

The or each braking element on the driven part and/or the or each braking element on the second part of the braking device can include an inclined surface. The inclined surface of the braking device braking element and the inclined surface of the driven part braking element are arranged to interact with one another in the overrun condition to separate the braking device from the driven part. For example, in the overrun condition, the inclined surfaces can be arranged to push the braking device axially away from the driven part, thereby preventing full engagement between the driven part and the second part of the braking device.

In some embodiments each driven part inclined surface slides over a respective one of the braking device inclined surfaces thereby generating a component of force in the axial direction, which causes the braking device to move longitudinally away from the driven part along the common axis. In some embodiments, the first and second parts of the braking device are moved axially away from the driven part. This is a safety feature to prevent the one turn coupling from locking up in the unlikely event that the driven element continues to be driven by the driving element when the braking device is engaged.

In some embodiments, the inclined surfaces can be arranged to push the braking device axially away from the driven part against the bias of a resilient element during the overrun condition. The resilient element is arranged to bias the second part of the braking device into engagement with the driven part when the overrun condition ends. In some embodiments, the inclined surfaces of the braking elements of the driven part face in a first rotational direction, and the inclined surfaces of the braking elements of the second part of the braking device face in a second rotational direction, and arranged such that the inclined surfaces of the braking elements of the driven part engage with the inclined surfaces of the braking elements of the second part of the braking device.

The braking device can include at least one resilient element arranged to damp relative rotational movement between the first and second parts of the braking device.

The resilient element can comprise a spring, such as a helical spring. The resilient element can be oriented in a circumferential direction. This arrangement helps to provide excellent braking and contributes to providing a braking device having a compact size.

The first part of the braking device can include a plurality of slots distributed around a circumferential pathway, such as a pitch circle. The second part of the braking device can include a plurality of slots distributed around a circumferential pathway, such as a pitch circle. The slots formed through the first part of the braking device can be aligned with the slots formed through the second part of the braking device such that each slot in the first part of the braking device has a corresponding slot formed in the second part of the braking device. Each pair of corresponding slots can include a resilient element such as a spring, which can be sized and shaped to act on the first part of the braking device and the second part of the braking device, thereby damping relative rotational movement between the first and second parts of the braking device. This arrangement provides excellent braking, in that the rotation of the driven part can be arrested through a relatively small rotational arc, for example typically within 1° to 4°, and provides a very compact braking device since the dampers sit in slots formed through the first and second parts of the braking device and are arranged to act in a circumferential direction.

The second part of the braking device can comprise a first member and a second member. The first member can be located on a first side of the first part of the braking device, and the second member can be located on a second side of the first part of the braking device. The second side can be opposite to the first side. The first and second members can be connected together by a plurality of bolts. Each bolt passes through a respective slot formed through the first part of the braking device. In some embodiments, the bolts and slots can be distributed circumferentially, for example about a pitch circle.

The one turn coupling can include a locking element arranged to selectively rotationally lock the driven part to the second part of the braking device. The locking element can be arranged to eliminate backlash between the driven part and the second part of the braking device when the driven part is fully engaged with the second part of the braking device, for example due to a negative turning moment. This provides more precise braking of the driven part and helps to ensure stopping of the driven part at the required angular orientation.

The locking element can be arranged to move between a non-locking position wherein the driven part is rotatable relative to the braking device, and a locking position wherein the braking device is locked for rotation with the driven part. The locking element can be arranged to move in a generally axial direction between the locking and non-locking positions, for example along an axis that is parallel to the common axis.

The one turn coupling can include biasing means, for example a resilient element, such as a spring, to bias the locking element towards rotationally locking the driven part to the second part of the braking device.

The locking element can comprise a retractable pin. The pin can be retractable into a recess. The biassing means can be located in the recess and can be arranged to bias the pin towards one of the driven part and the second part of the braking device.

The locking element can be mounted on one of the driven part and the second part of the braking device, and the other one of the driven part and the second part of the braking device can include a locking formation, such as a recess, that is arranged to receive the locking element.

In some embodiments, the one turn coupling can include a plurality of locking elements and a plurality of locking formations. Each locking element can be arranged to engage a respective one of the locking formations. Each locking formation can comprise a recess formed in a respective one of the braking elements. In some embodiments, the locking elements can be mounted on the driven part and the locking formations can be mounted on the second part of the braking device.

In some embodiments the one turn coupling is used in a baler for coupling a driveline. In a condition wherein the pawl engages the decoupling formation one of the driving part and the driven part is shifted away from the other to disengage the driveline.

According to another aspect of the invention there is provided a square baler comprising a compression chamber, a reciprocating plunger configured to compress bale material in the compression chamber to make a square bale, and a feeding system configured to feed bale material into the compression chamber, the feeding system comprising a feeding duct having an input end and an output end, a feeding fork configured to perform a loading stroke to pre-compress bale material in the feeding duct and a feeding stroke to transfer bale material from the feeding duct into the compression chamber, and a drive mechanism for driving movement of the feeding fork, the drive mechanism can include a one turn coupling according to any configuration described herein.

The drive mechanism can be arranged to drive the feeding fork to perform a feeding stroke in a condition wherein the driving part of the one turn coupling can be disengaged from the driven part, and to drive the feeding fork to perform a loading stroke in a condition wherein the driving part of the one turn coupling drivingly engages the driven part. The one turn coupling can be disengaged when the feeding stroke can be performed, this has the effect of fixing a position of a feeding fork crank during the feeding stroke, which provides a more consistent feed of baling material into the baling chamber.

The ratio of the number of feeding strokes to the number of loading strokes can be adjustable. For example, the ratio of loading strokes to feeding strokes can be 1:1, 2:1, 3:1, 4:1, 5:1.

According to another aspect, there is provided a method for operating an agricultural baler, the method can include: providing an agricultural baler having a compression chamber, a reciprocating plunger, and a feeding system comprising a feeding duct having an input end and an output end, a feeding fork, and a drive mechanism for driving movement of the feeding fork, the drive mechanism can include a one turn coupling according to any configuration described herein; the driving mechanism operating the feeding fork to perform at least one loading stroke thereby pre-compressing bale material in the feeding duct, while the driving part of the one turn coupling drivingly engages the driven part; the driving mechanism operating the feeding fork to perform a feeding stroke thereby transferring bale material from the feeding duct into the compression chamber, while the driving part is disengaged from the driven part; compressing bale material in the compression chamber to make a square bale.

Having the one turn coupling disengaged when the feeding stroke is performed, has the effect of fixing a position of a feeding fork crank during the feeding stroke, which provides a more consistent feed of baling material into the baling chamber.

Embodiments of the invention will now be described by way of example only with reference to the drawings, wherein:
Fig. 1 is a side view of the one turn coupling according to the invention in a decoupled configuration;
Fig. 2 is an isometric view of the one turn coupling;
Fig. 3 is a side view of the one turn coupling in a brake engaged configuration;
Fig. 4 is a side view of the one turn coupling in a coupled configuration;
Fig. 5 is an isometric view showing a detail of the one turn coupling;
Fig. 6 is an isometric view of the one turn coupling including a driving part and a driven part;
Fig. 7 is an isometric view of the one turn coupling in a driving mode;
Fig. 8 is an isometric view of a driving plate, comprising a driving part of the one turn coupling;
Fig. 9 is an isometric view of a driveline that includes the one turn coupling in an open configuration;
Fig. 10 is an isometric view of a gearbox comprising the one turn coupling;
Fig. 11 is an isometric view of a driven part of the one turn coupling;
Fig. 12 is an isometric view of the one turn coupling including a driving part and a driven part in a disengaged configuration;
Fig. 13 is an isometric view of a driveline, which includes the one turn coupling;
Fig. 14 is a schematic cross section through a part of the driveline;
Fig. 15 is a partial sectional isometric view of a brake device of the one turn coupling;
Fig. 16 is another sectional isometric view of the brake device;
Fig. 17 is a schematic sectional side view of a square baler in accordance with the invention;
Figure 18 is an isometric view of a feeding system and feeding fork drive mechanism of the baler;
Figure 19 is a side view of the feeding system and feeding fork drive mechanism; and
Figure 20 is a schematic illustration of an electronic control system of the baler.

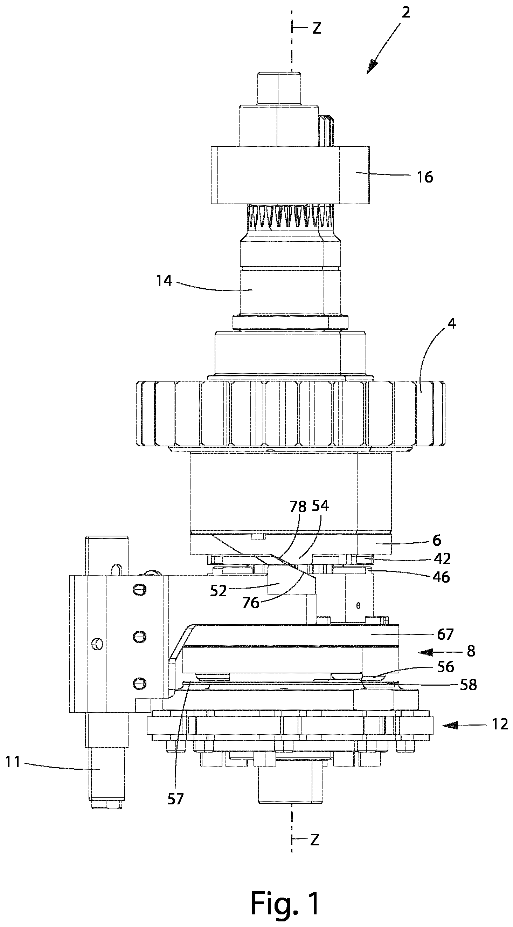

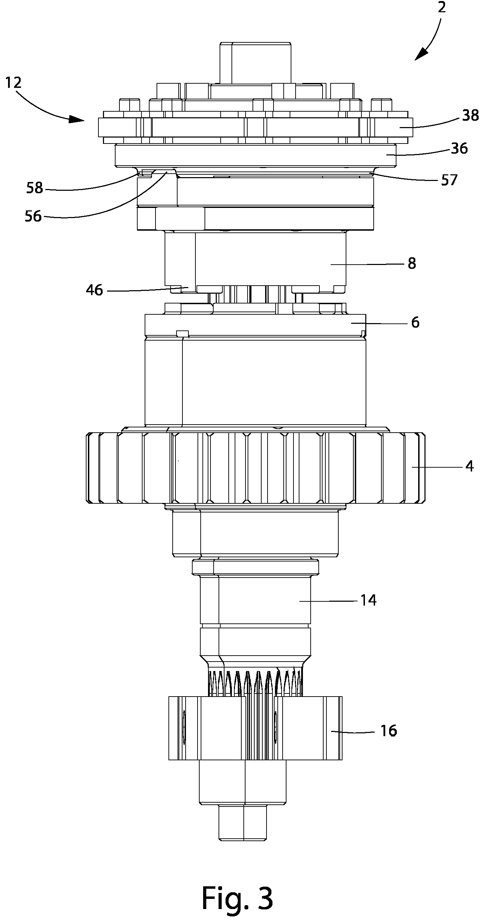

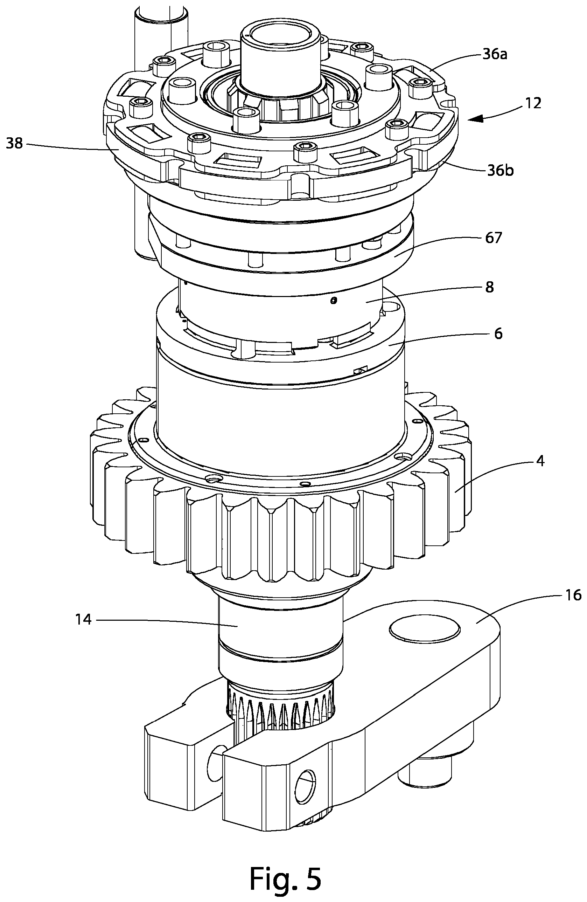

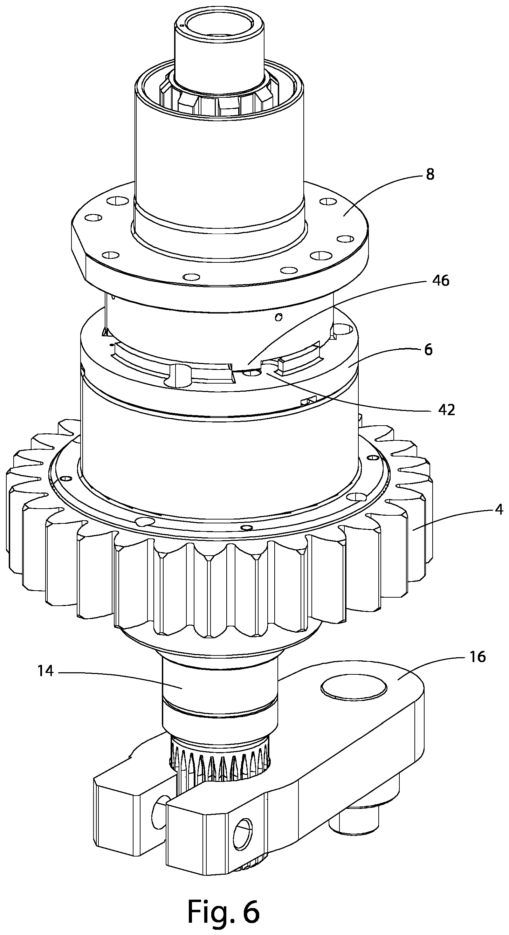

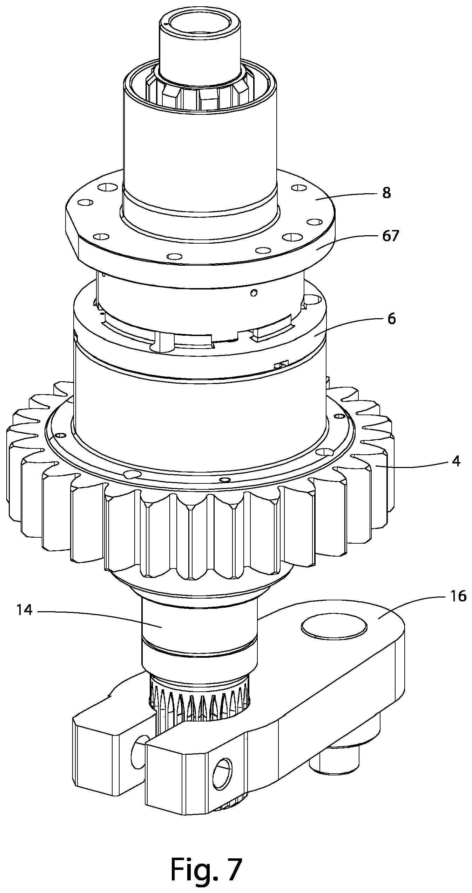

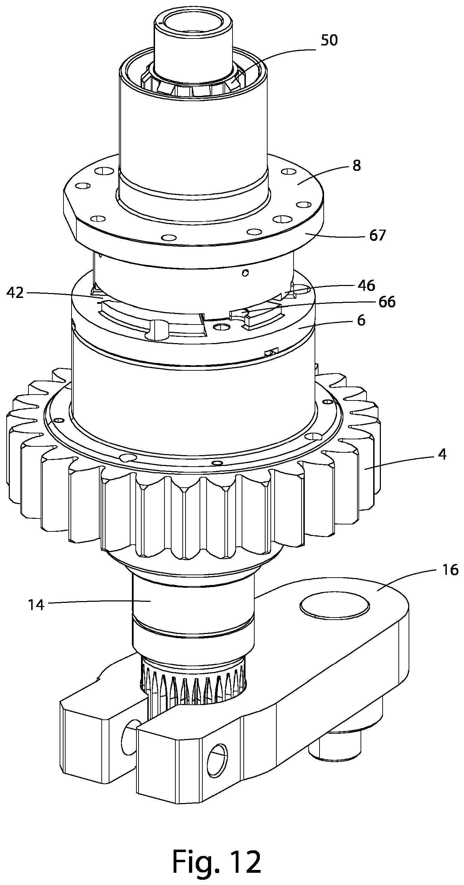

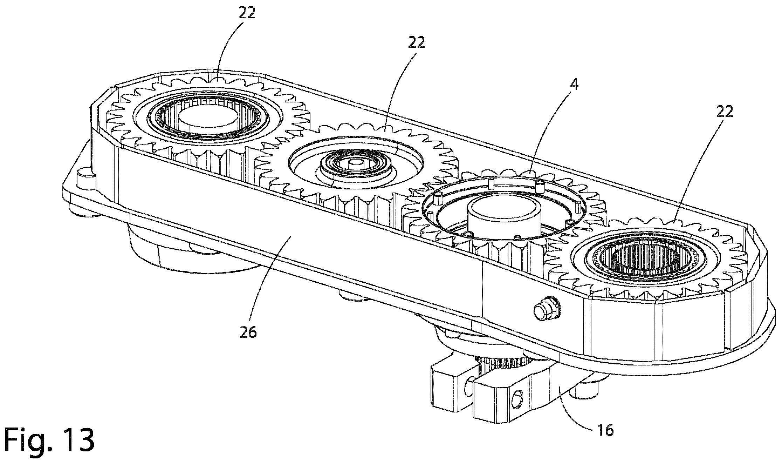

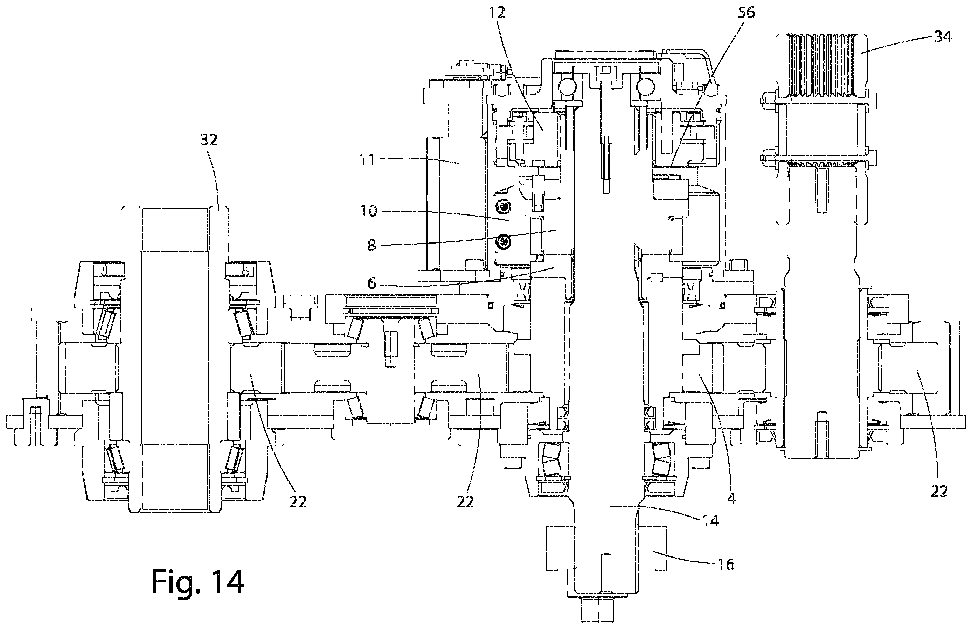

A one turn coupling 2 according to the invention is shown in Figs. 1 to 16.

The one turn coupling 2 can be actuated by an actuator 24 which can be operated electrically, hydraulically or pneumatically. In another example the actuator 24 is not present and the one turn coupling 2 is operated directly in response to signals received from at least one sensor (such as sensor 144), for example through an electrical, hydraulic, pneumatic or a mechanical link.

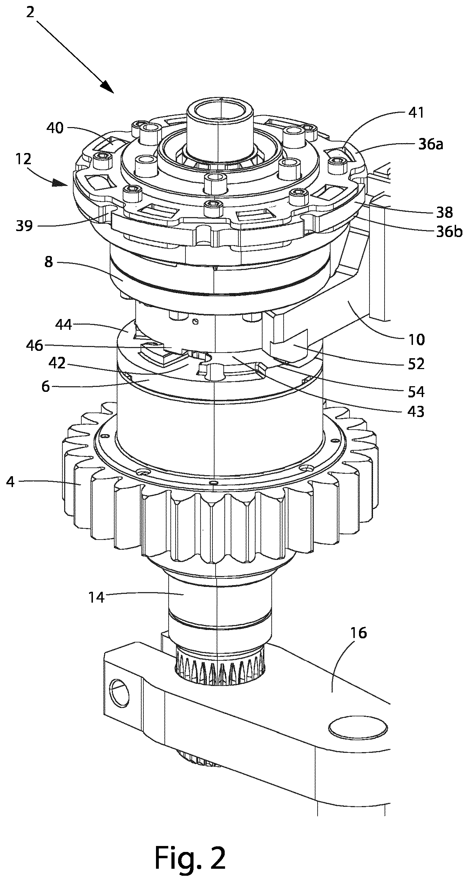

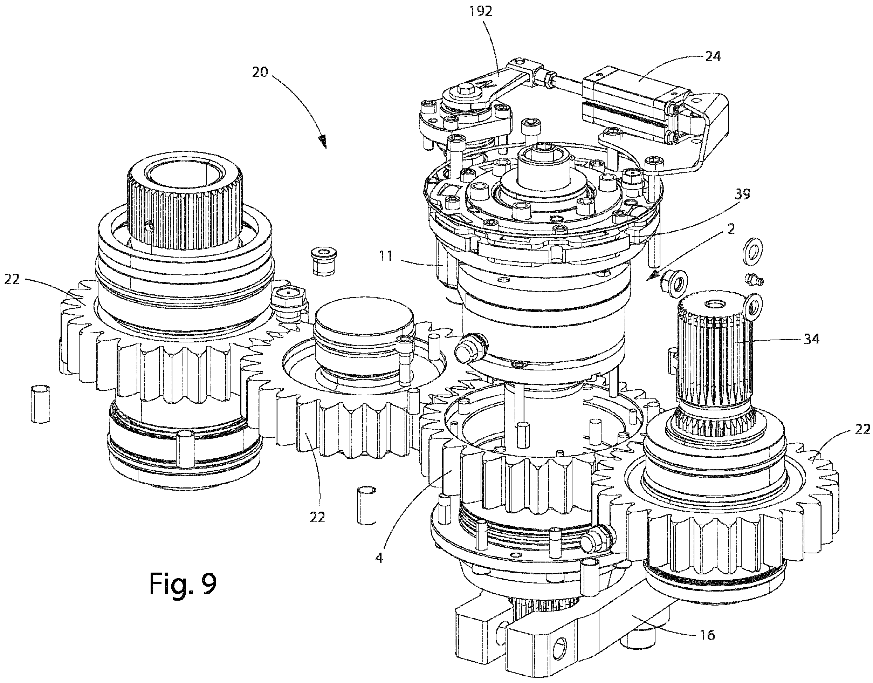

Referring to Figs. 1-7 and 12, in one embodiment, the one turn coupling 2 comprises an input gearwheel 4, a driving part 6, a driven part 8, a control element 10, for example a pawl mounted on a pivot axle 11, a braking device 12, a driven axle 14 and a crank 16 mounted on the driven axle 14. The crank 16 can be, for example, a steering arm crank in a square baler 100. The input gearwheel 4 is driven by one of the gears 22 by the drive axle 34 as illustrated in fig. 9, 10 and 13. Attached to the input gearwheel 4 is the driving part 6 as illustrated in fig 2.

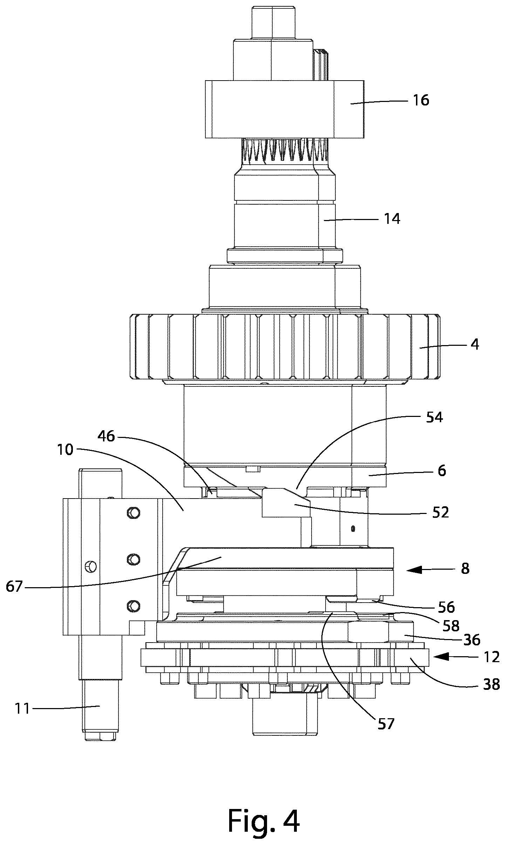

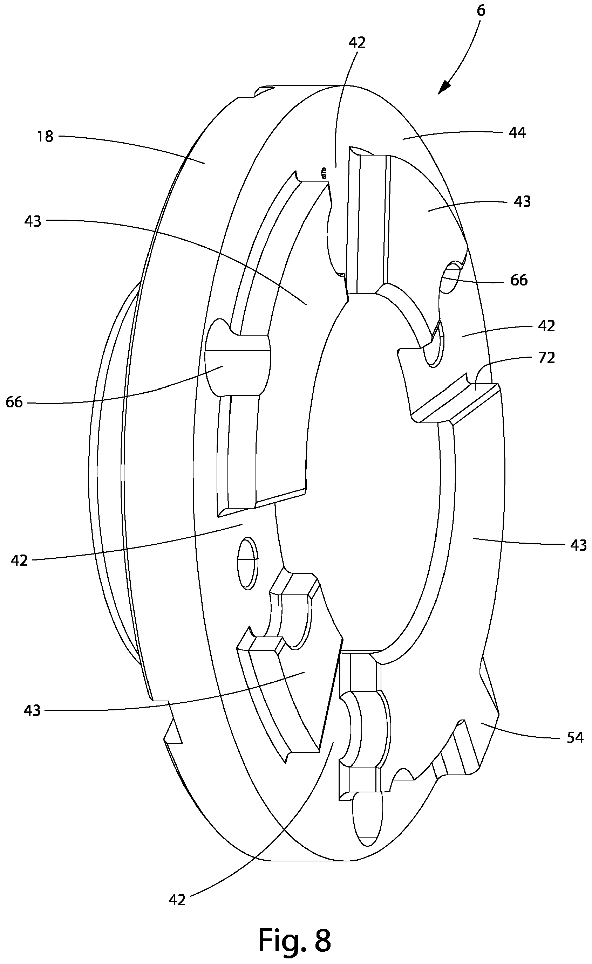

When the one turn coupling 2 is in an engaged or coupled mode, wherein the driving part 6 drivingly engages the driven part 8, the driven part 8 is resiliently pressed against the driving part 6, for example as illustrated in Fig. 4. The driving part 6 may comprise a drive plate 18, for example as shown in Fig. 8. The drive plate 18 can be annular. The driving part 6 is rotatably mounted about the driven axle 14, for example by bearings.

The driving part 6 has one or more drive recesses 42, for example as shown in Fig. 8, and one or more drive elements 43. The drive elements 43 can be in the form of protrusions that protrude outwards from a drive side face 44, and are sometimes referred to as notches or dogs. Each drive recess 42 is located between an adjacent pair of drive elements 43.

To uncouple the one turn coupling 2 the control element (pawl) 10 is brought, for example, pivoted, into a decoupling position between the driving part 6 and the driven part 8, for example as illustrated in Fig. 4.

The driving part 6 includes a decoupling formation 54. The decoupling formation 54 can comprise a protrusion on the driving part 6, which is sometimes referred to as a notch. The decoupling formation can have a contact surface 78 that is arranged to cooperate with a contact surface 76 of the chamfered end part 52 of the pawl 10, to separate the driving part 6 and driven part 8 apart.

The contact surfaces 76, 78 of respectively the decoupling notch 54 and the chamfered notch 52 comprising the end part of the pawl 10 comprise inclined drive surfaces that extend at least partially in a direction parallel to the main axis Z-Z of the coupling. Optionally, the contacting surfaces 76, 78 are helically shaped. For embodiments having helical contact surfaces, for example, similar to the thread of a screw/bolt, if the pawl slides against the decoupling formation there will constantly be surface-to-surface contact between the cam and the decoupling formation. By contrast, if the contact surfaces were for instance flat, there would be surface-to-surface contact in only one angular position of the driving/driven part, which ever includes the decoupling formation, but in other angular positions there would be a line or point contact. This can lead to extreme wear.

While the figures show the decoupling formation 54 located on the driving part 6, additionally or alternatively a decoupling formation 54 can be located on the driven part 8.

The driven part 8 may comprise a driven sleeve 28 and a fixedly connected annular driven plate 30 for example as shown in Fig, 11. The driven part 8 is mounted on the axle 14 and is locked for rotation therewith. Via a set of internal splines 50 the driven part 8 is configured to drive the driven axle 14 that is connected to the crank 16. The splines 50 enable the driven part 8 to slide longitudinally relative to the driven axle 14.

Since the drive part 6 and driven part 8 are mounted respectively about and on the driven axle 14, the driving part 6 and the driven part 8 share a common axis Z-Z, that is the driving part 6 and driven part 8 are arranged co-axially.

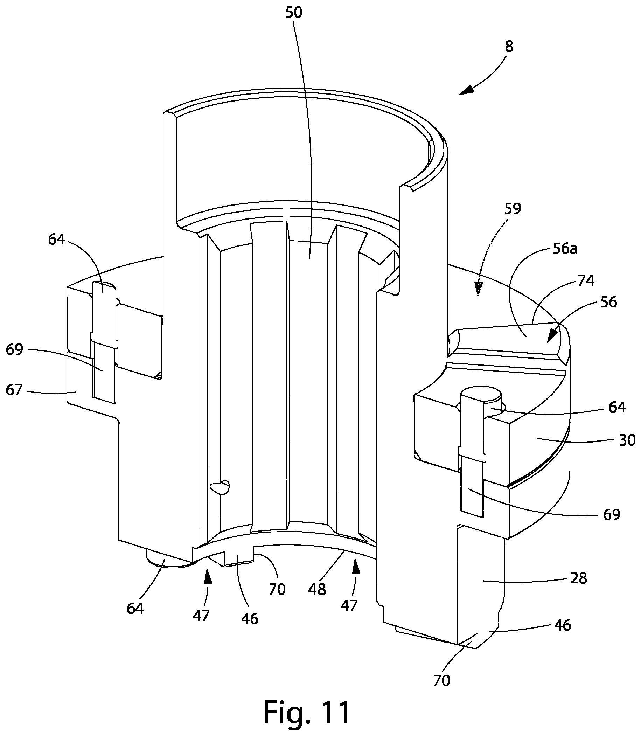

The driven part 8 has one or more drive elements 46 on a driven face 48 of the driven part 8, for example as shown in Fig. 11. The drive elements 46, can comprise protrusions, sometimes referred to as notches or dogs, that protrude outwards from the driven face 48. The driven part 8 includes drive recesses 47. Each drive recess 47 is located between an adjacent pair of drive elements 46.

When the driving part 6 drivingly engages the driven part 8, each driven part drive element 46 is located in a respective one of the driving part drive recesses 42, and each driving part drive element 43 is located in a respective one of the driven part drive recess 47. In this condition, the driven part 8 rotates with the driving part 6 and the pawl 10 is in a coupling position.

When the pawl 10 is in the decoupling position, a chamfered end part 52 of the pawl 10, which functions as a cam, is configured to engage the decoupling formation 54 on the driving part 6. As a result, the pawl 10 is pressed in an axial direction away from the driving part 6 and presses on the collar 67 of the driven part 8 as illustrated in Fig. 1. The pawl 10 moves translationally along the pivot axis 11, which is typically arranged parallel to the common axis Z-Z. This causes the driven part 8 to shift axially away from the driving part 6 along the driven axle 14. As a result the drive notches 46 will disengage and be taken out of the drive recesses 42, and the drive notches 43 will disengage drive recesses 47, so that the driven part 8 is no longer driven by the driving part 6. The position of the pawl 10 and the decoupling notch 54 guarantee a correct timing of the disengagement and thus ensure disengagement of the driven part 8 at the required angular orientation.

Further, if the coupling comprises more than one driving notch 46, the driving elements 43,46 and the drive recesses 42,47 are preferably arranged irregularly, for example angular spread over the contacting surfaces, such that the driving part 6 and driven part 8 can drivingly engage one another in only one rotational orientation of the driving part 6 and the driven part 8. In this case, there is only one angular position in which the one turn coupling 2 can engage. At all other rotational orientations the driving part 6 does not drivingly engage the driven part 8, but rather rotates relative to the driven part 8, until the relative rotational orientations of the driving part 6 and driven part 8 are such that the driving part 6 is able to drivingly engage the driven part 8. This arrangement ensures that the timing between driving part 6 and the driven part 8 is always correct and helps to ensure that the clutch functions as a one turn coupling. After the decoupling notch 54 has passed the pawl 10, resilient elements (e.g. springs) will press the driven part 8 against the driving part 6, but the coupling will only take place if the notches fit with the recesses. Together with the biassing of the driven element towards the driving part, automatic re-engagement at the correct angular position is assured.

As illustrated in Fig 8 and Fig 11, the drive notches/recesses 46,42 have respective contacting surfaces 70,72 that lie in a plane extending through the rotation axis Z-Z of the driven axle 14. As a result, no shifting forces are exerted on the driven part 8 by the driving torque. Since the contacting surfaces are radially oriented towards the rotation axis Z-Z of the driven axle 14, no axial forces, which under influence of the driving torque could force the driven part 8 to move (shift) axially along the rotation axis of the driven axle 14, are present.

While the figures show a shifting of the driven part 8 when disengaging the one turn coupling, alternatively the driven part 6 can be shifted when the one turn coupling is disengaged.

In order to keep the driven axle 14 and the crank 16 in their required positions at the moment of decoupling, the driven part 8 is connected to a braking device 12.

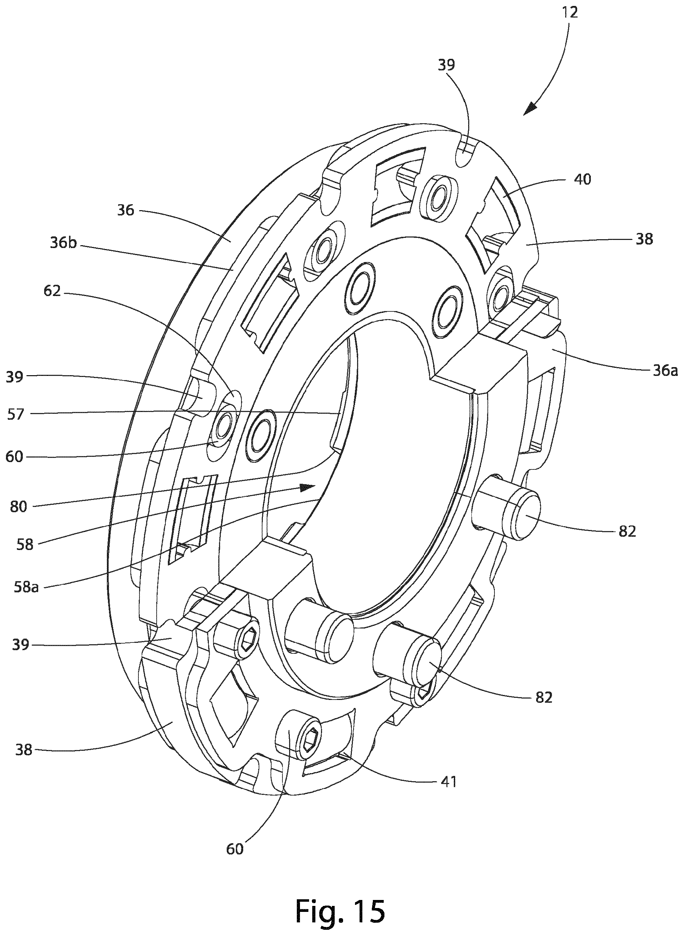

As illustrated in Fig. 11, the driven part 8 has braking elements 56 on the opposite side of the driven part 8 to the drive notches 46. The braking elements 56 can be in the form of protrusions, and are sometimes referred to as notches or dogs, and are arranged to engage in braking recesses 58 in the braking device 12, as illustrated in Fig. 15, in order to arrest rotation of the driven part 8.

When shifting the driven part 8 axially to disengage the drive notches 46, at the same time the braking notches 56 engage one or more braking recesses 58 of the braking device 12, as illustrated in Fig. 15. The braking device 12 then holds the driven part 8 in a rotationally fixed position.

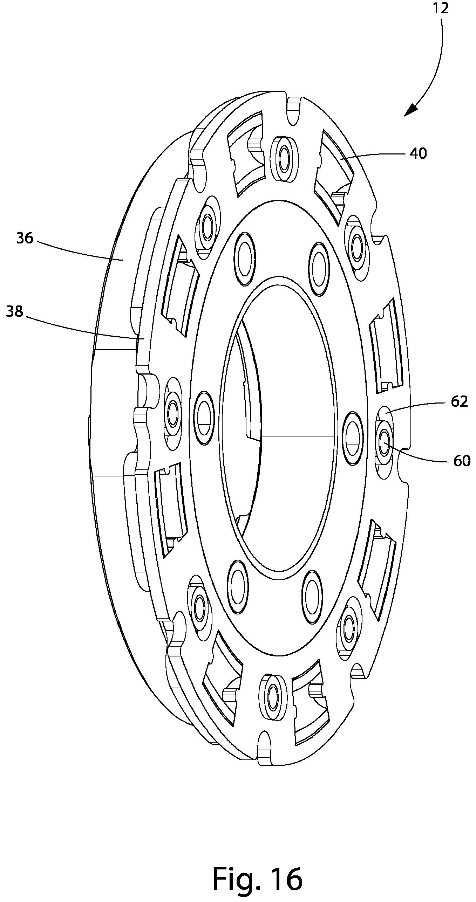

The braking device 12 is arranged to arrest rotation of the driven part 8. As illustrated in Figs. 15 and 16, the braking device 12 may for example comprise a first part comprising a brake plate 38 and second part comprising a brake sleeve 36, a first annular member 36a and a second annular member 36b. The first part 38 is attached to the second part 36 in a manner that allows limited rotational displacement between the first and second parts 38, 36. The first annular member 36a is located on a first side of the brake plate 38 and the second annular member 36b is located on a second side of the brake plate 38.

The brake sleeve 36 includes braking elements 57 that are arranged to engage with the braking elements 56 of the driving part 8. The braking elements 56, 57 can be in the form of protrusions, which are sometimes referred to as notches or dogs.

In order to reduce the transient shock as the braking notches 56 engage the braking elements 57, the braking device 12 has one or more resilient elements 40 between the first and second parts of the braking device, for example between the brake sleeve 36 and the brake plate 38. In some arrangements, the resilient elements 40 act on the brake plate 38 and at least one of the annual plates 36a, 36b. Each resilient element 40 is located in a respective slot 41, and the resilient elements 40 and slots 41 are distributed about a pitch circle, which is located towards a peripheral portion of the brake plate 38. This provides very effective damping to relative rotational movement between the first and second parts of the braking device and provides a very compact arrangement.

The resilient elements 40, for example helical springs, can be configured to transfer torque between the brake plate 38 and the brake sleeve 36.

The brake plate 38 has a plurality of slots 39 in its outer periphery, which engage for example longitudinal splines (not illustrated) provided on the interior of the housing 35. This prevents rotation of the brake plate 38 relative to the housing 35 but permits axial movement of the brake plate 38 parallel to the rotation axis Z-Z of the driven axle 14. The braking device 12 is resiliently biased in the axial direction Z-Z towards the driven part 8 by resilient elements 82, for example springs, with reference to Fig. 15. The first and second parts 38, 36 of the braking device 12 can be mounted about the driven axle 14, and are therefore mounted co-axially with the driving part 6 and driven part 8.

The brake sleeve 36 with the brake recesses 58 can turn against the rotationally fixed mounted brake plate 38 for a few degrees to absorb the transient shock and then return to its original position. Typically, rotation of the driven part 8 can be arrested through a relatively small rotational arc between the brake sleeve 36 and the brake plate 38, for example typically within 1° to 4°. The brake sleeve 36 and the brake plate 38 are connected to one another by bolts 60 that engage elongate slots 62 in the brake plate 38, allowing limited relative rotation between the brake sleeve 36 and the brake plate 38 against the resilient elements 40.

It is noticed that the notches in the driven part 8, comprising both the drive notches 46 and the braking notches 56, cooperate respectively with recesses 42,58 that are wider than the notches 46,56. The driven part 8 is arranged such that during the transition from a driving condition, wherein the drive elements 46 of the driven part 8 engage the drive elements 43 of the driving part 6 to a braking condition, wherein the braking elements 56 of the driven part engage the braking elements 57 of the braking device, or a transition from the braking condition to the driving condition, the notches 46,56 will be positioned within respective driving part 6 and braking device recesses 42,58. However, only when the notches on one side of the driven part 8 have fully left their respective recesses, will the notches on the other side of the driven part 8 engage the ends of their recesses. For example, when transitioning from the driving condition to the braking condition, the driven part driving elements 46 are initially engaged with driving part driving elements 43, and the driven part braking elements 56 are located in the braking device recesses 58. However, under normal conditions, the driven part braking elements 56 only engage the braking device braking elements 57 after the driven part driving elements 46 disengage the driving part driving elements 43. When transitioning from the braking condition to the driving condition, the driven part braking elements 56 are engaged with the braking device braking elements 57, and the driven part driving elements 46 are located in driving part recesses 42. However, under normal conditions, the driven part driving elements 46 only engage the driving part driving elements 43 after the driven part braking elements 56 disengage the braking device braking elements 57. This is designed to provide sufficient time to shift the driving elements/braking elements fully into the respective recesses before they engage their corresponding driving elements/braking elements, so that the contact surfaces between engaging driving elements 43,46 in the driving condition, and engaging braking elements 56,57 in the braking condition, are fully used. This is to avoid the risk of excessive wear on the braking elements 56,57 and driving elements 43,46 if the contact surface is too small. Further a correct timing of the clutch is guaranteed. Another advantage of this embodiment is that the driven part 8 does not rotate freely relative to the driving part 6 since either the notches 46 on the one side of the driven part 8 are located within the recesses 42 of the driving part 6 or the notches 56 at the other side of the driven part 8 are located in the recesses 58 and are caught and held stationary by the brake device 12. This ensures correct and accurate stopping at the required angular position of the driven part 8 and crank 16.

In some arrangements, the one turn coupling 2 can be arranged such that the braking element end faces 56a (see Figure 11) touch the respective bottom faces 58a (see Figure 15) of the recesses 58 of the second part of the braking device, thereby pushing the braking device 12 axially along the common axis Z-Z against the bias of springs 82, after the driving elements 46 of the driven part fully disengage the driving elements 43 of the driving part 6.

Thus when transitioning from the driving condition to the braking condition, the one turn coupling can be arranged to undertake the following operational steps:
1) the driven part 8 moves towards the braking device 12 and the driving elements 46 of the driven part and the driving elements 43 of the driving part start to dis-engage from one another;
2) the driven part braking elements 56 enter into the braking device recesses 58 while the driven part driving elements 46 are still in engagement with the driving part driving elements 43;
3) the driven part driving elements 46 and the driving part driving elements 43 fully dis-engage from one another;
4) end faces 56a of the driven part braking elements 56 touch the bottom faces 58a of the braking device recesses 58 and push the braking device 12 axially along the common axis Z-Z against the resiliency of springs 82;
5) the driven part 8 continues to rotate by its rotational mass-inertia, still pushing on the braking device 12;
6) the driven part braking elements 56 and the braking device braking elements 57 engage; and
7) the driven part 8 is stopped by the braking device 12.

In some arrangements, the one turn coupling 2 can be arranged such that the braking element end faces 56a (see Figure 11) touch the respective bottom faces 58a (see Figure 15) of the recesses 58 of the second part of the braking device, thereby pushing the braking device 12 axially along the common axis Z-Z against the bias of springs 82, before the driving elements 46 of the driven part fully disengage the driving elements 43 of the driving part 6.

Thus, when transitioning from the driving condition to the braking condition, the one turn coupling can be arranged to undertake the following operational steps:
1) the driven part 8 moves towards the braking device 12 and the driving elements 46 of the driven part and the driving elements 43 of the driving part start to dis-engage from one another;
2) the driven part braking elements 56 enter into the braking device recesses 58 while the driven part driving elements 46 are still in engagement with the driving part driving elements 43;
3) end faces 56a of the driven part braking elements 56 touch the bottom faces 58a of the braking device recesses 58 and push the braking device 12 axially along the common axis Z-Z against the resiliency of springs 82;
4) the driven part driving elements 46 and the driving part driving elements 43 fully dis-engage from one another;
5) the driven part 8 continues to rotate by its rotational mass-inertia, still pushing on the braking device 12;
6) the driven part braking elements 56 and the braking device braking elements 57 engage; and
7) the driven part 8 is stopped by the braking device 12.

During a process of disengagement of the one turn coupling 2, wherein the one turn coupling 2 transitions from the driving condition to the braking condition, the relative angular orientations of the, the driving part driving elements 43, the driving part recesses 42, the driven part driving elements 46, the driven part driving recesses 47, the driven part braking elements 56, the driven part braking recesses 59, the braking device braking elements 57 and the braking device recesses 58 can be arranged such that, the driving part driving elements 43 are rotationally aligned with the driven part driving recesses 47, the driven part driving elements 46 are rotationally aligned with the driving part recesses 42, the driven part braking elements 56 are rotationally aligned with the braking device recesses 58, and the braking device braking elements 57 are rotationally aligned with the driven part braking recesses 59. This is to help ensure that that dis-engagement of the one turn coupling 2 is done quickly and smoothly. The arrangement also helps to ensure correct stopping of the driven part at the required moment and required position.

The decoupling formation 54 is located on the driving part 6 relative to the driving part drive elements 43 and driving part recesses 42 to initiate axial movement of the driven part 8 at the correct time to transition from the driving condition to the braking condition. This is to help ensure that that dis-engagement of the one turn coupling 2 is done quickly and smoothly. The arrangement also helps to ensure correct stopping of the driven part at the required moment and required position.

In some scenarios, the driven part 8 may engage the braking device 12 while still driven by the driving part 6. For example, in the process of dis-engagement of the driving part 6 from the driven part 8, it is possible under some conditions that the driven part driving elements 46 engage the driving part driving elements 43 while the driven part brake elements 56 are located within the braking device recesses 58.

The one turn coupling can have an overrun condition. The overrun condition is a condition wherein the braking elements 56 of the driven part rotationally slide over the braking elements 57 of the braking device 12.

In the overrun condition the braking device 12 and/or the driven part 8 can be arranged to separate, for example against a biasing element such as a spring. The biassing element is arranged to bias the braking device 12 towards the driving part 6.

In the overrun condition, the braking device 12 is arranged to move axially away from the driven part 8. This typically occurs when the torque applied to the braking device 12 by the driven part 8 is sufficiently large to overcome the resiliency of the biasing element and to cause the driven part to slide relative to the braking device 12.

For example, each braking element 56 on the driven part and/or the or each braking element 57 on the second part of the braking device 12 can include an inclined contact surface 74,80, as illustrated in Figs. 8 and 11. The inclined surfaces 80 of the braking device 12 and the inclined surfaces 74 of the driven part 8 are arranged to interact with one another in the overrun condition to separate the braking device 12 from the driven part 8.

The inclined surfaces 74 of the braking elements 56 of the driven part 8 face in a first rotational direction, and the inclined surfaces 80 of the braking elements 57 of the second part of the braking device 12 face in a second rotational direction, and are arranged such that the inclined surfaces 74 of the braking elements 56 of the driven part engage with the inclined surfaces 80 of the braking elements 57 of the second part of the braking device.

The braking notches/recesses 56, 58 have contacting surfaces 74, 80 with an engagement angle of about 15 degrees, which allows that under high braking forces the braking device 12 can be shifted away axially along the rotation axle 14 from the driven element 8 against resilient elements, for example springs 82. This feature functions as an overload prevention device.

For example, in the overrun condition, the inclined surfaces can be arranged to push the braking device 12 axially away from the driven part, thereby preventing driving engagement between the driven part 8 and the second part of the braking device 12. This is a safety feature to prevent the one turn coupling from locking up in the unlikely event that the driven part 8 continues to be driven by the driving part 6 when the braking device 12 is engaged.

The one or more resilient elements 82 are arranged to bias the second part of the braking device into engagement with the driven part 8, when the overrun condition ends.

In order to prevent the turning back of the drive notches 46 in the drive recesses 42, as well as the brake notches 56 in the brake recesses 58 (i.e. reverse rotation due to backlash in the system since the drive/brake notches 46,56 are smaller than the drive/brake recesses 42,58), the driven part 8 is provided with locking elements 64, for example, resiliently biased pins, that engage holes or part holes 66 in the driving part 6 and in the braking device 12, to prevent the notches from turning back to the other end of the recess; so giving an angular fixation. That is, the locking elements 64 lock the driving part 6 for rotation with the driven part 8 and the locking elements 64 lock the driven part 8 for rotation with the brake device 12 in a manner that substantially eliminates any backlash.

The locking elements 64 can be arranged to move between non-locking positions wherein the driven part 8 is rotatable relative to the driving part 6, and locking positions wherein the driving part 6 is locked for rotation with the driven part 8. Each locking element 64 can be arranged to move in a generally axial direction between the locking and non-locking positions, for example along a respective axis that is parallel to the common axis Z-Z.

The locking elements 64 can be arranged to move between non-locking positions wherein the driven part 8 is rotatable relative to the braking device 12, and locking positions wherein the driven part 8 is locked for rotation with the braking device 12. Each locking element 64 can be arranged to move in a generally axial direction between the locking and non-locking positions, for example along a respective axis that is parallel to the common axis Z-Z.

For example, the locking elements 64 can be biased by resilient elements 69, as illustrated in Fig. 11, for example springs, towards their locking positions.

The locking elements 64 are pressed towards their respective counterpart holes or part holes 66 during the coupling/decoupling operation and in their locking position the locking elements 64 fit into the holes or part holes 66 in the counterparts so as to lock together the driven part 8 to respectively the driving part 6 and the braking device 12. This eliminates angular play between the connecting parts 6 and 8, and respectively 8 and 12.

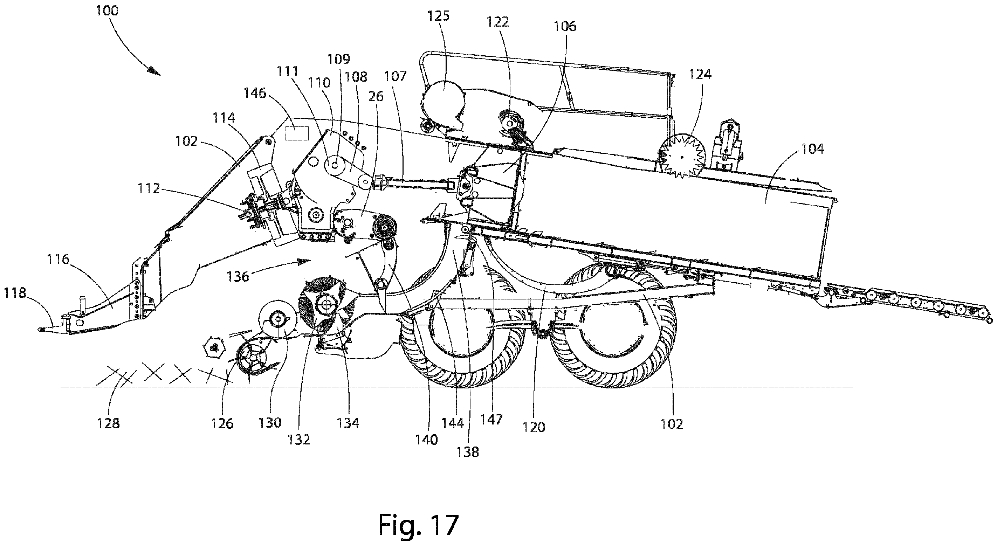

A baler 100 according to an exemplary embodiment of the invention is shown in Figure 17. The baler comprises a support frame 102, which supports a compression chamber 104 having a substantially rectangular cross-section, with an input end into which bale material is fed and an output end from which completed bales are ejected.

A reciprocating plunger 106 is mounted at the input end of the compression chamber 104. The reciprocating plunger 106 is driven in and out of the compression chamber 104 by a plunger drive mechanism comprising a connecting rod 107 and a plunger crank 108 that is mounted on a driving shaft 109 of the main gearbox 110. A driving shaft sensor 111 may be provided to sense the rotational position of the driving shaft 109, which determines the position of the reciprocating plunger 106.

The main gearbox 110 is driven from an input shaft 112 that may be connected to the power take off (PTO) of a tractor (not shown). A flywheel 114 is mounted on the input shaft 112. The baler includes a drawbar 116 having a coupling 118 for coupling the baler to a tractor.

The baler includes a binding system for binding a bale that has been formed in the compression chamber 104. The binding system may comprise a twine needle 120 and a knotting device 122. A sensor 124 may be provided adjacent an opening in the compression chamber 104 for sensing the length of the bale in the compression chamber 104. Optionally, an air blower 125 may be provided for blowing away debris from the knotting device 122 to ensure correct operation thereof.

The baler includes a pick-up device 126 for picking up bale material 128, for example crop material, from a windrow in a field. Optionally, a forwarding rotor 130 and/or a cutting and forwarding rotor 132 and a cutting knife 134 may be provided to feed the bale material from the pick-up device 126 to a feeding system 136 for feeding the bale material to the compression chamber 104.

The feeding system 136 comprises a curved feeding duct 138 (or prechamber), a feeding fork 140 that is configured to transfer the bale material along the feeding duct 138 and into the compression chamber 104, and a feeding fork drive mechanism 141 drives and steers movement of the feeding fork. A feeder gearbox 26 supplies drive to the feeding fork drive mechanism 141. The feeding system 136 may also include one or more sensors 144 that are configured to sense the quantity of bale material in the feeding duct 138 and a command device 146 that controls operation of the baler, including the delivery of drive from the gearbox 26, steering of the feeding fork 140 and operation of a feeding duct lock 147.

The drive mechanism 141 is arranged to drive the feeding fork 140 to perform a feeding stroke in a condition wherein the driving part 6 of the one turn coupling 2 is disengaged from the driven part 8, and to drive the feeding fork 140 to perform a loading stroke in a condition wherein the driving part 6 of the one turn coupling drivingly engages the driven part 8. When the one turn coupling is disengaged this has the effect of fixing a position of a feeding fork second pivot 187 during the feeding stroke, which provides a more consistent feed of baling material into the baling chamber 104.

The ratio of the number of feeding strokes to the number of loading strokes can be adjustable. For example, the ratio of loading strokes to feeding strokes can be 1:1, 2:1, 3:1, 4:1, 5:1.

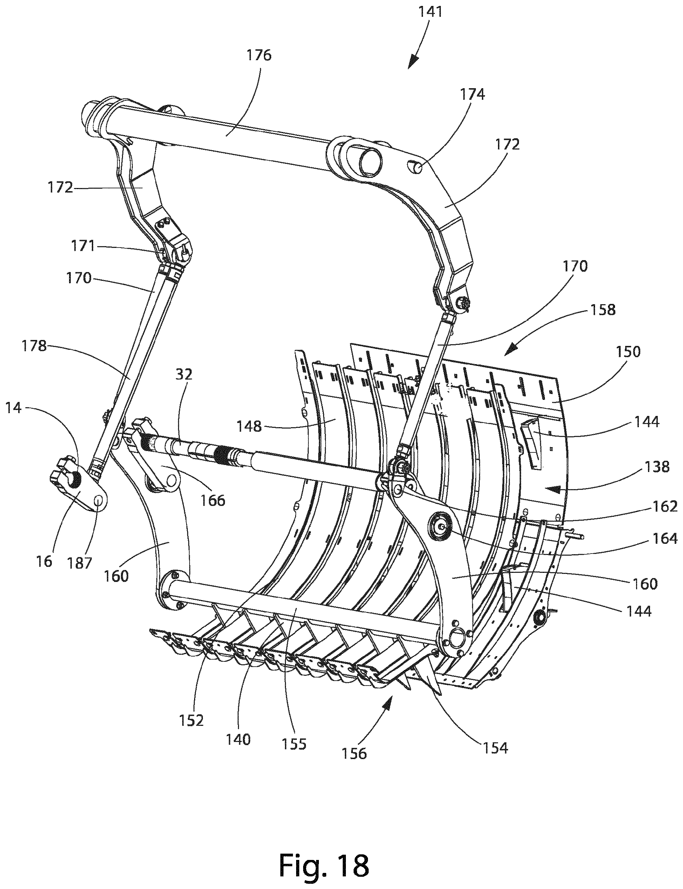

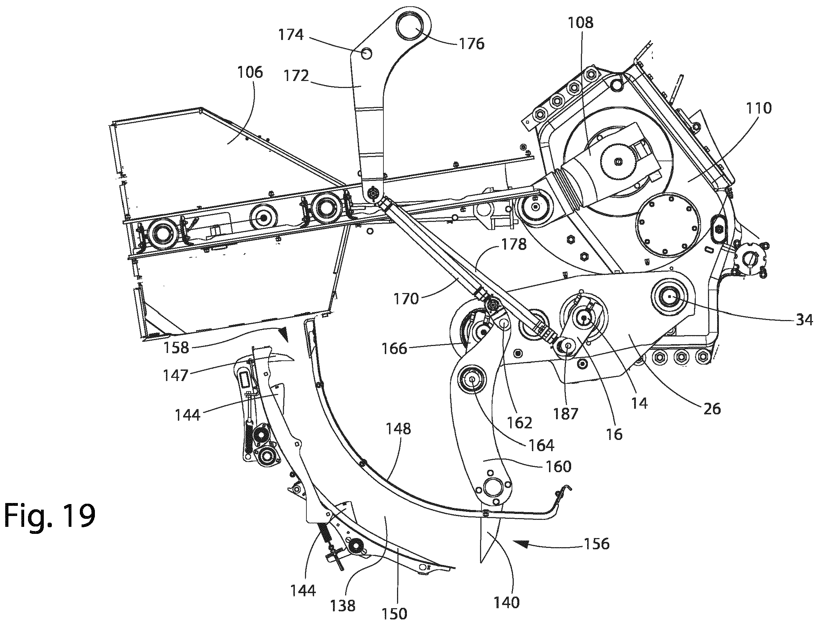

The feeding system 136 is shown in more detail in figures 18 and 19. The feeding duct 138 is curved and is provided between a curved inner wall 148 and a curved outer wall 150. A plurality of elongate slots 152 are provided in the inner wall 148 and extend lengthwise along the feeding duct. The sensors 144 are mounted in openings in the outer curved wall 150 and extend into the feeding duct 138 to sense bale material in the feeding duct 138.

The feeding fork 140 comprises a plurality of tines 154 mounted on a support beam 155. The tines 154 are aligned with the slots 152, allowing the tines to extend into and move along the length of the feeding duct 138 from an input end 156 at the lower part of the feeding duct to an output end 158 at the upper part of the feeding duct 138.

The feeding fork 140 is supported by a pair of feeding fork arms 160, which are rigidly attached at their lower ends to opposite ends of the feeding fork support beam 155. Each feeding fork arm 160 includes an upper pivot joint 162 at the upper end of the feeding fork arm 160 and an intermediate pivot joint 164 between the upper and lower ends of the feeding fork arm. Movement of the feeding fork 140 along the feeding duct 138 is steered by the relative movement of the upper and intermediate pivot joints 162, 164.

The intermediate pivot joint 164 of each feeding fork arm 160 is attached to an outer end of a feeding fork crank 166. The inner ends of the two feeding fork cranks 166 are attached to a rotatable feeding fork shaft 32, which is driven from the main input shaft 112 via the main gearbox 110 and the feeder fork gearbox 26. The feeding fork cranks 166 are configured to rotate with the feeding fork shaft 32 about the longitudinal axis of the shaft 32 so that the intermediate pivot joints 162 follow a circular path centred on the longitudinal axis of the shaft 32.

The upper pivot joint 162 of each feeding fork arm 160 is pivotably connected by a connecting rod, referred to herein as a second steering arm 170, to a lower end of one of a pair of swing arms 172. The swing arms 172 are configured to pivot about a swing arm pivot 174. A swing arm connecting beam 176 connects the upper ends of the swing arms 172 so that they pivot together.

At least one of the swing arms 172 is pivotably connected at its lower end via a first pivot joint 171 and another connecting rod, referred to herein as a first steering arm 178, to a second pivot joint 187 at an outer end of a steering arm crank 16.

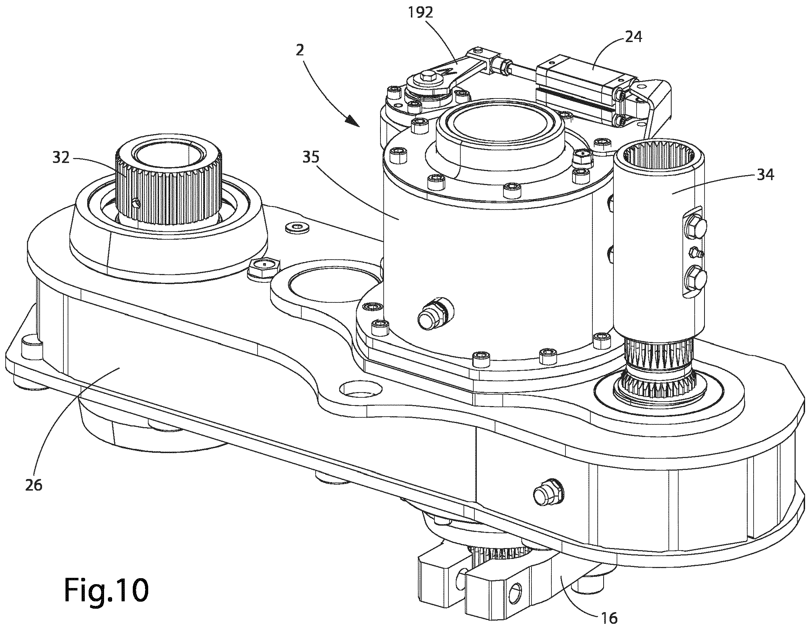

The steering arm crank 16 is driven from the main input shaft 112 via the main gearbox 110, the feeder fork gearbox 26 and a clutch mechanism for example in the form of a one turn coupling 2 as described above, which is actuated by for example an actuating arm 192 that acts on an actuator 24, as illustrated in Figs. 9 and 10. The actuator can for example be of a hydraulic, electric or pneumatic kind. During operation of the baler the one turn coupling 2 is controlled so that during the loading stroke the steering arm crank 16 rotates synchronously with feeding fork crank 166 and during the feeding stroke the steering arm crank 16 remains stationary and only the feeding fork crank 166 rotates. During each loading stroke, the one turn coupling 2 transmits drive from the driving part 6 to the driven part 8, and hence drives crank 16. During each feeding stroke, the driven part 8 disengages the driving part 6, and is braked by the braking device 12, thereby arresting rotation of the steering arm crank 16.

It is noted that the feeding fork cranks 166 and the steering arm crank 16 are all driven from the main input shaft 112 of the baler, thus avoiding the need for a secondary drive motor to drive one or more of the cranks 166, 16.

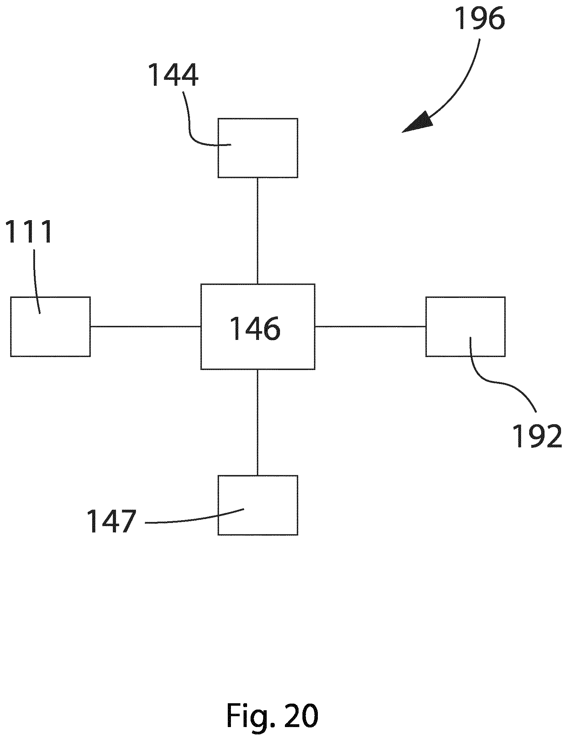

Operation of the baler may be controlled by the command device 146, which may for example be an electronic controller or a mechanical control device. An example of an electronic control system 196 is illustrated in Figure 20. The electronic control system 196 includes the command device 146, in this case an electronic controller, which is connected to receive input signals from the driving shaft sensor 111 and the sensors 144 that sense the quantity of bale material in the feeding duct 138. The electronic control system 196 is also connected through the actuator 24 to the actuator arm 192 to control operation of the one turn coupling 2, and to the feeding duct lock 147. Operation of these components is controlled and synchronised according to the quantity of bale material in the feeding duct 138 and the operational position of the plunger 106.

In an embodiment with or without and electronic control system like electronic control system 196, the one turn coupling 2 as described above may also be activated for example through a direct mechanical link between the actuating arm 192 of one turn coupling 2 and the sensors 144 for sensing the quantity of bale material in the feeding duct 138.

The feeding fork shaft 32 and the steering arm shaft, driven axle 14, are both driven by the feeding fork gearbox 26, which is connected to the main gearbox 110 and takes its drive from the main gearbox 110 as shown in Figs. 18 and 19.

A one turn coupling according to the described embodiments is advantageous for use on a square baler. Due to the reciprocating movement of the plunger 106, negative torques and alternating movements could occur on the driveline and reach the feeder fork driveline through the main gearbox 110 and the feeder fork gearbox 26. A design of the one turn coupling with a brake device such as the brake device 12 will ensure those negative torques do not have an effect on the feeder fork driveline 141 and feeder fork 140 movement, as the required stationary angular orientation for the driven part 8 and the crank 16 are sufficiently held in position and thus a correct movement of the feeder fork 140 for performing a feeding stroke is ensured, without risk of the feeder fork driveline 141 getting locked up which could lead to serious damage to for example the one turn coupling 2, the feeder fork 140, feeder fork driveline 141 and the feeding duct 138, which eventually can lead to non-operationality of the whole baler 100.

Also the process of disengagement of the driven part 8, in which the driven part 8 is not able to freely rotate relative to the driving part 8 and/or the brake device 12, ensures that negative torques and the alternating movements cannot lead to a lock up of the driven part 8 in between the driving part 6 and the brake device 12. A lock up of the driven part 8 inside the one turn coupling (within the housing 35) could lead to severe damage of for example the one turn coupling 2, the feeder fork 140 and the feeder fork driveline 141, which eventually can lead to non-operationality of the whole baler 100.

Furthermore the locking elements 64 of the one turn coupling 2 provide an excellent additional protection for the negative torques and alternating movements due to the reciprocating movement of the plunger 106 in the baler 100. The locking elements 64 provide additional protection to the required driven and stationary angular position of the driven part 8 and thus to the required angular position of the crank 16, both during the time the driven part 8 is fully drivingly engaged with the driving part 6 (loading stroke of the feeder fork 140) and during the time the driven part 8 is fully stationary engaged with the brake device 12 (feeding stroke of the feeder fork 140), as the locking elements prevent the driven part 8 from rotating relative to either the driven part 6 or the brake device 12. In this case the driven part 8 is prevented from rotating in the opposite direction relative to the direction of normal rotational drive of the driving part 6, and the driven part 8 is prevented from moving from its stationary position in a disengaged situation of the one turn coupling 2. In case the driven part 8 would differ in rotation direction or if the driven part 8 would run away from its required stationary position, severe damage could occur to for example the one turn coupling 2, the feeder fork 140 and the feeder fork driveline 141, which eventually can lead to non-operationality of the whole baler 100.

It will be appreciated by the skilled person that modifications can be made to the above embodiments that fall within the scope of the claimed invention.

The description presents exemplary embodiments and, together with the drawings, serves to explain principles of the invention. However, the scope of the invention is not intended to be limited to the precise details of the embodiments or exact adherence with all method installation steps, since variations will be apparent to a skilled person and are deemed also to be covered by the claims. Terms for components used herein should be given a broad interpretation that also encompasses equivalent functions and features.

Descriptive terms should also be given the broadest possible interpretation; e.g. the term "comprising" as used in this specification means "including" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" may be used for convenience of explanation usually with reference to the illustrations and are not intended to be ultimately limiting if an equivalent function can be achieved with an alternative dimension and/or direction.

The description herein refers to embodiments with particular combinations of configuration steps or features, however, it is envisaged that further combinations and cross-combinations of compatible steps or features between embodiments will be possible within the scope of the claims.

## Claims

1. A one turn coupling, comprising: a driving part (6); a driven part (8), the driving part (6) and the driven part (8) are rotatable about a common axis (Z-Z); and a control element (10), **characterized in that** the control element comprises a pawl (10), configured to control engagement and disengagement of the driving part (6) with the driven part (8), and the pawl (10) comprises a cam element (52) that is engageable with a decoupling formation (54) on the driving part (6) and/or the driven part (8) to disengage the one turn coupling (2) by moving the driving part (6) and the driven part (8) apart from each other, wherein the pawl (10) is pivotably displaceable about a pivot axis (11) into and out of engagement with the decoupling formation (54).

2. The one turn coupling of claim 1, including a braking device (12) arranged to arrest rotation of the driven part (8) in a condition wherein the driven part (8) is disengaged from the driving part (6) or in a process of disengaging the driving part (6), wherein the braking device (12) includes a first part (38) that does not rotate and a second part (36) that is rotatable relative to the first part (38), and wherein the driven part (8) is arranged to move axially to drivingly engage the second part (36) of the braking device.

3. The one turn coupling according claim 2 where the braking device (12) is resiliently mounted on/in the housing (35) of the coupling (2), longitudinally along the common axis (Z-Z).

4. The one turn coupling of claim 2 or 3, wherein the driven part (8) includes at least one braking element (56) and at least one brake recess (59); the second part (36) of the braking device (12) includes at least one braking element (57) and at least one recess (58); wherein the at least one braking element (56) of the driven part is arranged for insertion into the at least one recess (58) of the second part of the braking device and the at least one braking element (57) of the second part of the braking device is arranged for insertion into the at least one brake recess (59) of the driven part.

5. The one turn coupling of claim 4, wherein the driven part braking element (56) and/or the second part of the braking device braking element (57) has an inclined slope (74,80) that is arranged to separate the braking device (12) and the driven part (8).

6. The one turn coupling of any one of claims 2 to 5, wherein the braking device (12) includes at least one resilient element (40) arranged to damp relative rotational movement between the first and second parts (36,38) of the braking device (12).

7. The one turn coupling of claim 6, wherein the resilient element (40) comprises a spring, such as a helical spring, wherein the resilient element (40) is oriented to damp relative rotational motion in a circumferential direction.

8. The one turn coupling of any of the preceding claims, wherein the driving part (6) includes at least one drive element (43) and at least one recess (42); the driven part (8) includes at least one drive element (46) and at least one drive recess (47); wherein the driving part drive element (43) is seated in the driven part drive recess (47) in a condition wherein the driving part (6) drivingly engages the driven part (8).

9. The one turn coupling of any one of claims 4 to 7, when dependent on claim 8, wherein the one turn coupling is arranged such that the at least one driving element (46) of the driven part (8) is located in the at least one recess (42) of the driving part (6) whilst simultaneously the at least one braking element (56) of the driven part (8) is located in the at least one recess (58) of the second part (36) of the braking device, when transitioning from a driving condition, wherein the driven part driving element (46) engages the driving part driving element (43), to a braking condition, wherein the driven part braking element (56) engages the braking device braking element (57).

10. The one turn coupling of any of the preceding claims, including a locking element (64) arranged to selectively rotationally lock the driven part (8) to the second part (36) of the braking device, wherein the locking element (64) is arranged to move between a non-locking position wherein the driven part (8) is rotatable relative to the braking device (12), and a locking position wherein the braking device (12) is locked for rotation with the driven part (8).

11. The one turn coupling of claim 10, wherein the locking element (64) is mounted on one of the driven part (8) and the second part (36) of the braking device, and the other one of the driven part (8) and the second part (36) of the braking device includes a locking formation (66), such as a recess, that is arranged to receive the locking element (64).

12. The one turn coupling of any of the preceding claims, including a locking element (64) arranged to selectively rotationally lock the driven part (8) to the driving part (6), wherein the locking element (64) is arranged to move between a non-locking position wherein the driven part (8) is rotatable relative to the driving part (6), and a locking position wherein the driving part (6) is locked for rotation with the driven part (8).

13. The one turn coupling of claim 12, wherein the locking element (64) is mounted on one of the driven part (8) and the driving part (6), and the other one of the driven part (8) and the driving part (6) includes a locking formation (66), such as a recess, that is arranged to receive the locking element (64).

14. The one turn coupling of any one of claims 10 to 13, including biasing means, such as a resilient element (69), to bias the locking element (64) towards the locking position.

15. The one turn coupling of any one of claims 10 to 14, wherein the locking element (64) comprises a retractable pin.

16. The one turn coupling of any of the preceding claims, wherein the control element (10) is movable translationally.

17. The one turn coupling of claim 16, wherein the coupling (2) is disengaged by moving the one of the driven part (8) and the driving part (8) translatory from the other of the driven part (8) and the driving part (6) and wherein the control element (10) is moving simultaneously with the one of the driven part (8) and the driving part (6).

18. The one turn coupling of any of the preceding claims, wherein cooperating contact surfaces (76,78) of the decoupling formation (54) and the cam (52) include helical surfaces, in order to ensure surface-to-surface contact between the cooperating contact surfaces (76,78) of the decoupling formation and the cam during the dis-engagement procedure of the driven part (8) from the driving part (6).

19. The one turn coupling of any of the preceding claims, wherein one of the driving part (6) and the driven part (8) comprises the decoupling formation (54) and in a condition wherein the one turn coupling (2) is disengaged the other one of the driving part (6) and the driven part (8) is arranged to move apart/away from the part with the decoupling formation (54).

20. The one turn coupling of any of the preceding claims, wherein the driving part (6) and the driven part (8) have irregular arrangements, such that the driving part (6) and the driven part (8) drivingly engage in only one rotational orientation of the driving part (6) and driven part (8), and the driven part (8) is biased towards the driving part (6) and is arranged to automatically drivingly engage the driving part (6) in a condition wherein the one rotational orientation of the driving part (6) and driven part (8) occurs.

21. The one turn coupling according to any one of the preceding claims, for use in a baler (100) for coupling a driveline, whereby the driving part (6) is drivingly connected to a power source and the driven part (8) is drivingly connected to an operative part of the baler wherein in a condition wherein the pawl (10) engages the decoupling formation (54) one of the driving part (6) and the driven part (8) is shifted away from the other to disengage the driveline.

22. A square baler comprising a compression chamber (104), a reciprocating plunger (106) configured to compress bale material in the compression chamber (104) to make a square bale, and a feeding system (136) configured to feed bale material into the compression chamber (104), the feeding system (136) comprising a feeding duct (138) having an input end (156) and an output end (158), a feeding fork (140) configured to perform a loading stroke to pre-compress bale material in the feeding duct (138) and a feeding stroke to transfer bale material from the feeding duct (138) into the compression chamber (104), and a drive mechanism (141) for driving movement of the feeding fork (140), the drive mechanism (141) including a one turn coupling (2) according to any one of the preceding claims.

23. A method for operating an agricultural baler (100), the method including: providing an agricultural baler (100) having a compression chamber (104), a reciprocating plunger (106), and a feeding system (136) comprising a feeding duct (138) having an input end (156) and an output end (158), a feeding fork (140), and a drive mechanism (141) for driving movement of the feeding fork (140), the drive mechanism (141) including a one turn coupling (2) according to any one of the preceding claims; the driving mechanism (141) operating the feeding fork (140) to perform at least one loading stroke thereby pre-compressing bale material in the feeding duct (138), while the driving part (6) of the one turn coupling drivingly engages the driven part (8); the driving mechanism (141) operating the feeding fork (140) to perform a feeding stroke thereby transferring bale material from the feeding duct (138) into the compression chamber (104), while the driving part (6) is disengaged from the driven part (8); compressing bale material in the compression chamber (104) to make a square bale.

## Patentansprüche

1. Eine Ein-Umdrehungs-Kupplung, die Folgendes beinhaltet: ein Antreibteil (6); ein angetriebenes Teil (8), wobei das Antreibteil (6) und das angetriebene Teil (8) um eine gemeinsame Achse (Z-Z) drehbar sind; und ein Steuerelement (10), **dadurch gekennzeichnet, dass** das Steuerelement eine Sperrklinke (10) beinhaltet, die konfiguriert ist, um den Eingriff des Antreibteils (6) in das angetriebene Teil (8) und sein Lösen davon zu steuern, und die Sperrklinke (10) ein Nockenelement (52) beinhaltet, das mit einer Entkopplungsformation (54) an dem Antreibteil (6) und/oder dem angetriebenen Teil (8) in Eingriff gebracht werden kann, um die Ein-Umdrehungs-Kupplung (2) durch Auseinanderbewegen des Antreibteils (6) und des angetriebenen Teils (8) zu lösen, wobei die Sperrklinke (10) um eine Schwenkachse (11) in und aus dem Eingriff mit der Entkopplungsformation (54) schwenkbar verlagerbar ist.

2. Ein-Umdrehungs-Kupplung gemäß Anspruch 1, die eine Bremsvorrichtung (12) umfasst, welche eingerichtet ist, um die Drehung des angetriebenen Teils (8) in einem Zustand, in dem das angetriebene Teil (8) von dem Antreibteil (6) gelöst ist, oder in einem Prozess des Lösens des Antreibteils (6) zu stoppen, wobei die Bremsvorrichtung (12) ein erstes Teil (38), das sich nicht dreht, und ein zweites Teil (36), das relativ zu dem ersten Teil (38) drehbar ist, umfasst, und wobei das angetriebene Teil (8) eingerichtet ist, um sich axial zu bewegen, um antriebsbezogen in das zweite Teil (36) der Bremsvorrichtung einzugreifen.

3. Ein-Umdrehungs-Kupplung gemäß Anspruch 2, wobei die Bremsvorrichtung (12) in Längsrichtung entlang der gemeinsamen Achse (Z-Z) elastisch an/in dem Gehäuse (35) der Kupplung (2) montiert ist.

4. Ein-Umdrehungs-Kupplung gemäß Anspruch 2 oder 3, wobei das angetriebene Teil (8) mindestens ein Bremselement (56) und mindestens eine Bremsenaussparung (59) umfasst; das zweite Teil (36) der Bremsvorrichtung (12) mindestens ein Bremselement (57) und mindestens eine Aussparung (58) umfasst; wobei das mindestens eine Bremselement (56) des angetriebenen Teils zur Einführung in die mindestens eine Aussparung (58) des zweiten Teils der Bremsvorrichtung eingerichtet ist und das mindestens eine Bremselement (57) des zweiten Teils der Bremsvorrichtung zur Einführung in die mindestens eine Bremsenaussparung (59) des angetriebenen Teils eingerichtet ist.

5. Ein-Umdrehungs-Kupplung gemäß Anspruch 4, wobei das Bremselement (56) des angetriebenen Teils und/oder das Bremselement (57) des zweiten Teils der Bremsvorrichtung eine geneigte Schräge (74, 80) aufweist, die eingerichtet ist, um die Bremsvorrichtung (12) und das angetriebene Teil (8) zu trennen.

6. Ein-Umdrehungs-Kupplung gemäß einem der Ansprüche 2 bis 5, wobei die Bremsvorrichtung (12) mindestens ein elastisches Element (40) umfasst, das eingerichtet ist, um die relative Drehbewegung zwischen dem ersten und dem zweiten Teil (36, 38) der Bremsvorrichtung (12) zu dämpfen.

7. Ein-Umdrehungs-Kupplung gemäß Anspruch 6, wobei das elastische Element (40) eine Feder wie etwa eine Schraubenfeder beinhaltet, wobei das elastische Element (40) ausgerichtet ist, um die relative Drehbewegung in einer Umfangsrichtung zu dämpfen.

8. Ein-Umdrehungs-Kupplung gemäß einem der vorhergehenden Ansprüche, wobei das Antreibteil (6) mindestens ein Antriebselement (43) und mindestens eine Aussparung (42) umfasst; das angetriebene Teil (8) mindestens ein Antriebselement (46) und mindestens eine Antriebsaussparung (47) umfasst; wobei das Antriebselement (43) des Antreibteils in einem Zustand, in dem das Antreibteil (6) antriebsbezogen in das angetriebene Teil (8) eingreift, in der Antriebsaussparung (47) des angetriebenen Teils sitzt.

9. Ein-Umdrehungs-Kupplung gemäß einem der Ansprüche 4 bis 7, wenn abhängig von Anspruch 8, wobei die Ein-Umdrehungs-Kupplung so eingerichtet ist, dass bei einem Übergang von einem Antreibzustand, in dem das Antreibelement (46) des angetriebenen Teils in das Antreibelement (43) des Antreibteils eingreift, in einen Bremszustand, in dem das Bremselement (56) des angetriebenen Teils in das Bremselement (57) der Bremsvorrichtung eingreift, sich das mindestens eine Antreibelement (46) des angetriebenen Teils (8) in der mindestens einen Aussparung (42) des Antreibteils (6) befindet, während sich gleichzeitig das mindestens eine Bremselement (56) des angetriebenen Teils (8) in der mindestens einen Aussparung (58) des zweiten Teils (36) der Bremsvorrichtung befindet.

10. Ein-Umdrehungs-Kupplung gemäß einem der vorhergehenden Ansprüche, die ein Verriegelungselement (64) umfasst, das eingerichtet ist, um das angetriebene Teil (8) selektiv drehbezogen an dem zweiten Teil (36) der Bremsvorrichtung zu verriegeln, wobei das Verriegelungselement (64) eingerichtet ist, um sich zwischen einer Nicht-Verriegelungsposition, in der das angetriebene Teil (8) relativ zu der Bremsvorrichtung (12) drehbar ist, und einer Verriegelungsposition, in der die Bremsvorrichtung (12) zur Drehung mit dem angetriebenen Teil (8) verriegelt ist, zu bewegen.

11. Ein-Umdrehungs-Kupplung gemäß Anspruch 10, wobei das Verriegelungselement (64) an einem von dem angetriebenen Teil (8) und dem zweiten Teil (36) der Bremsvorrichtung montiert ist und das andere von dem angetriebenen Teil (8) und dem zweiten Teil (36) der Bremsvorrichtung eine Verriegelungsformation (66) wie etwa eine Aussparung umfasst, die eingerichtet ist, um das Verriegelungselement (64) aufzunehmen.

12. Ein-Umdrehungs-Kupplung gemäß einem der vorhergehenden Ansprüche, die ein Verriegelungselement (64) umfasst, das eingerichtet ist, um das angetriebene Teil (8) selektiv drehbezogen an dem Antreibteil (6) zu verriegeln, wobei das Verriegelungselement (64) eingerichtet ist, um sich zwischen einer Nicht-Verriegelungsposition, in der das angetriebene Teil (8) relativ zu dem Antreibteil (6) drehbar ist, und einer Verriegelungsposition, in der das Antreibteil (6) zur Drehung mit dem angetriebenen Teil (8) verriegelt ist, zu bewegen.

13. Ein-Umdrehungs-Kupplung gemäß Anspruch 12, wobei das Verriegelungselement (64) an einem von dem angetriebenen Teil (8) und dem Antreibteil (6) montiert ist und das andere von dem angetriebenen Teil (8) und dem Antreibteil (6) eine Verriegelungsformation (66) wie etwa eine Aussparung umfasst, die eingerichtet ist, um das Verriegelungselement (64) aufzunehmen.

14. Ein-Umdrehungs-Kupplung gemäß einem der Ansprüche 10 bis 13, die ein Vorspannmittel wie etwa ein elastisches Element (69) umfasst, um das Verriegelungselement (64) in Richtung der Verriegelungsposition vorzuspannen.

15. Ein-Umdrehungs-Kupplung gemäß einem der Ansprüche 10 bis 14, wobei das Verriegelungselement (64) einen einziehbaren Stift beinhaltet.

16. Ein-Umdrehungs-Kupplung gemäß einem der vorhergehenden Ansprüche, wobei das Steuerelement (10) translatorisch bewegbar ist.

17. Ein-Umdrehungs-Kupplung gemäß Anspruch 16, wobei die Kupplung (2) gelöst wird, indem das eine von dem angetriebenen Teil (8) und dem Antreibteil (8) translatorisch von dem anderen von dem angetriebenen Teil (8) und dem Antreibteil (6) bewegt wird, und wobei sich das Steuerelement (10) gleichzeitig mit dem einen von dem angetriebenen Teil (8) und dem Antreibteil (6) bewegt.

18. Ein-Umdrehungs-Kupplung gemäß einem der vorhergehenden Ansprüche, wobei zusammenwirkende Kontaktoberflächen (76, 78) der Entkopplungsformation (54) und des Nockens (52) schraubenförmige Oberflächen umfassen, um einen Oberfläche-zu-Oberfläche-Kontakt zwischen den zusammenwirkenden Kontaktoberflächen (76, 78) der Entkopplungsformation und des Nockens während des Lösevorgangs des angetriebenen Teils (8) von dem Antreibteil (6) sicherzustellen.

19. Ein-Umdrehungs-Kupplung gemäß einem der vorhergehenden Ansprüche, wobei eines von dem Antreibteil (6) und dem angetriebenen Teil (8) die Entkopplungsformation (54) beinhaltet und in einem Zustand, in dem die Ein-Umdrehungs-Kupplung (2) gelöst wird, das andere von dem Antreibteil (6) und dem angetriebenen Teil (8) eingerichtet ist, um sich von dem Teil mit der Entkopplungsformation (54) los/weg zu bewegen.

20. Ein-Umdrehungs-Kupplung gemäß einem der vorhergehenden Ansprüche, wobei das Antreibteil (6) und das angetriebene Teil (8) unregelmäßige Anordnungen aufweisen, sodass das Antreibteil (6) und das angetriebene Teil (8) antriebsbezogen in nur einer Drehausrichtung des Antreibteils (6) und des angetriebenen Teils (8) ineinander eingreifen, und das angetriebene Teil (8) in Richtung des Antreibteils (6) vorgespannt ist und eingerichtet ist, um in einem Zustand, in dem die eine Drehausrichtung des Antreibteils (6) und des angetriebenen Teils (8) auftritt, automatisch antriebsbezogen in das Antreibteil (6) einzugreifen.

21. Ein-Umdrehungs-Kupplung gemäß einem der vorhergehenden Ansprüche zur Verwendung in einer Ballenpresse (100) zum Koppeln eines Antriebsstrangs, wobei das Antreibteil (6) antriebsbezogen mit einer Leistungsquelle verbunden ist und das angetriebene Teil (8) antriebsbezogen mit einem Betriebsteil der Ballenpresse verbunden ist, wobei in einem Zustand, in dem die Sperrklinke (10) in die Entkopplungsformation (54) eingreift, eines von dem Antreibteil (6) und dem angetriebenen Teil (8) von dem anderen weg verschoben wird, um den Antriebsstrang zu lösen.

22. Eine Rechteckballenpresse, die Folgendes beinhaltet: eine Kompressionskammer (104), einen hin- und hergehenden Kolben (106), der konfiguriert ist, um Ballenmaterial in der Kompressionskammer (104) zu komprimieren, um einen Rechteckballen herzustellen, und ein Einspeisesystem (136), das konfiguriert ist, um Ballenmaterial in die Kompressionskammer (104) einzuspeisen, wobei das Einspeisesystem (136) Folgendes beinhaltet: einen Einspeisekanal (138), der ein Eingangsende (156) und ein Ausgangsende (158) aufweist, eine Einspeisegabel (140), die konfiguriert ist, um einen Ladehub zum Vorkomprimieren von Ballenmaterial in dem Einspeisekanal (138) und einen Einspeisehub zum Transferieren von Ballenmaterial von dem Einspeisekanal (138) in die Kompressionskammer (104) durchzuführen, und einen Antriebsmechanismus (141) zum Antreiben der Bewegung der Einspeisegabel (140), wobei der Antriebsmechanismus (141) eine Ein-Umdrehungs-Kupplung (2) gemäß einem der vorhergehenden Ansprüche umfasst.

23. Ein Verfahren zum Betreiben einer landwirtschaftlichen Ballenpresse (100), wobei das Verfahren Folgendes umfasst: Bereitstellen einer landwirtschaftlichen Ballenpresse (100), die Folgendes aufweist: eine Kompressionskammer (104), einen hin- und hergehenden Kolben (106) und ein Einspeisesystem (136), das Folgendes beinhaltet: einen Einspeisekanal (138), der ein Eingangsende (156) und ein Ausgangsende (158) aufweist, eine Einspeisegabel (140) und einen Antriebsmechanismus (141) zum Antreiben der Bewegung der Einspeisegabel (140), wobei der Antriebsmechanismus (141) eine Ein-Umdrehungs-Kupplung (2) gemäß einem der vorhergehenden Ansprüche umfasst; wobei der Antreibmechanismus (141) die Einspeisegabel (140) betreibt, sodass sie mindestens einen Ladehub durchführt, wodurch Ballenmaterial in dem Einspeisekanal (138) vorkomprimiert wird, während das Antreibteil (6) der Ein-Umdrehungs-Kupplung antriebsbezogen in das angetriebene Teil (8) eingreift; wobei der Antreibmechanismus (141) die Einspeisegabel (140) betreibt, sodass sie einen Einspeisehub durchführt, wodurch Ballenmaterial von dem Einspeisekanal (138) in die Kompressionskammer (104) transferiert wird, während das Antreibteil (6) von dem angetriebenen Teil (8) gelöst ist; Komprimieren von Ballenmaterial in der Kompressionskammer (104), um einen Rechteckballen herzustellen.

## Revendications

1. Un accouplement à un tour, comprenant : une partie d'entraînement (6) ; une partie entraînée (8), la partie d'entraînement (6) et la partie entraînée (8) pouvant tourner autour d'un axe commun (Z-Z) ; et un élément de commande (10), **caractérisé en ce que** l'élément de commande comprend un cliquet (10), configuré pour commander l'engagement et le désengagement de la partie d'entraînement (6) avec la partie entraînée (8), et le cliquet (10) comprend un élément formant came (52) qui peut s'engager avec une formation de désaccouplement (54) sur la partie d'entraînement (6) et/ou la partie entraînée (8) pour désengager l'accouplement à un tour (2) en écartant la partie d'entraînement (6) et la partie entraînée (8) l'une de l'autre, dans lequel le cliquet (10) peut être déplacé de manière pivotante autour d'un axe de pivotement (11) en engagement et hors d'engagement avec la formation de désaccouplement (54).

2. L'accouplement à un tour selon la revendication 1, incluant un dispositif de freinage (12) agencé pour arrêter la rotation de la partie entraînée (8) dans un état dans lequel la partie entraînée (8) est désengagée de la partie d'entraînement (6) ou dans un processus de désengagement de la partie d'entraînement (6), dans lequel le dispositif de freinage (12) inclut une première partie (38) qui ne tourne pas et une deuxième partie (36) qui peut tourner par rapport à la première partie (38), et dans lequel la partie entraînée (8) est agencée pour se déplacer axialement pour s'engager par entraînement avec la deuxième partie (36) du dispositif de freinage.

3. L'accouplement à un tour selon la revendication 2, dans lequel le dispositif de freinage (12) est monté de manière élastique sur/dans le logement (35) de l'accouplement (2), longitudinalement le long de l'axe commun (Z-Z).

4. L'accouplement à un tour de la revendication 2 ou la revendication 3, dans lequel la partie entraînée (8) inclut au moins un élément de freinage (56) et au moins un évidement de frein (59) ; la deuxième partie (36) du dispositif de freinage (12) inclut au moins un élément de freinage (57) et au moins un évidement (58) ; dans lequel l'au moins un élément de freinage (56) de la partie entraînée est agencé pour l'insertion dans l'au moins un évidement (58) de la deuxième partie du dispositif de freinage et l'au moins un élément de freinage (57) de la deuxième partie du dispositif de freinage est agencé pour l'insertion dans l'au moins un évidement de frein (59) de la partie entraînée.

5. L'accouplement à un tour de la revendication 4, dans lequel l'élément de freinage de partie entraînée (56) et/ou l'élément de freinage de la deuxième partie du dispositif de freinage (57) a une pente inclinée (74, 80) qui est agencée pour séparer le dispositif de freinage (12) et la partie entraînée (8).

6. L'accouplement à un tour de l'une quelconque des revendications 2 à 5, dans lequel le dispositif de freinage (12) inclut au moins un élément élastique (40) agencé pour amortir le mouvement de rotation relatif entre les première et deuxième parties (36, 38) du dispositif de freinage (12).

7. L'accouplement à un tour de la revendication 6, dans lequel l'élément élastique (40) comprend un ressort, tel qu'un ressort hélicoïdal, dans lequel l'élément élastique (40) est orienté pour amortir le mouvement de rotation relatif dans une direction circonférentielle.

8. L'accouplement à un tour de l'une quelconque des revendications précédentes, dans lequel la partie d'entraînement (6) inclut au moins un élément d'entraînement (43) et au moins un évidement (42) ; la partie entraînée (8) inclut au moins un élément d'entraînement (46) et au moins un évidement d'entraînement (47) ; dans lequel l'élément d'entraînement de partie d'entraînement (43) est placé dans l'évidement d'entraînement de partie entraînée (47) dans un état dans lequel la partie d'entraînement (6) s'engage par entraînement avec la partie entraînée (8).

9. L'accouplement à un tour de l'une quelconque des revendications 4 à 7, lorsqu'elles dépendent de la revendication 8, dans lequel l'accouplement à un tour est agencé de sorte que l'au moins un élément d'entraînement (46) de la partie entraînée (8) est situé dans l'au moins un évidement (42) de la partie d'entraînement (6) alors que simultanément l'au moins un élément de freinage (56) de la partie entraînée (8) est situé dans l'au moins un évidement (58) de la deuxième partie (36) du dispositif de freinage, lors de la transition d'un état d'entraînement, dans lequel l'élément d'entraînement de partie entraînée (46) s'engage avec l'élément d'entraînement de partie d'entraînement (43), à un état de freinage, dans lequel l'élément de freinage de partie entraînée (56) s'engage avec l'élément de freinage de dispositif de freinage (57).

10. L'accouplement à un tour de l'une quelconque des revendications précédentes, incluant un élément de verrouillage (64) agencé pour verrouiller sélectivement en rotation la partie entraînée (8) à la deuxième partie (36) du dispositif de freinage, dans lequel l'élément de verrouillage (64) est agencé pour se déplacer entre une position de non-verrouillage dans laquelle la partie entraînée (8) peut tourner par rapport au dispositif de freinage (12), et une position de verrouillage dans laquelle le dispositif de freinage (12) est verrouillé pour tourner avec la partie entraînée (8).

11. L'accouplement à un tour de la revendication 10, dans lequel l'élément de verrouillage (64) est monté sur l'un des éléments parmi la partie entraînée (8) et la deuxième partie (36) du dispositif de freinage, et l'autre de la partie entraînée (8) et de la deuxième partie (36) du dispositif de freinage inclut une formation de verrouillage (66), telle qu'un évidement, qui est agencée pour recevoir l'élément de verrouillage (64).

12. L'accouplement à un tour de l'une quelconque des revendications précédentes, incluant un élément de verrouillage (64) agencé pour verrouiller sélectivement en rotation la partie entraînée (8) à la partie d'entraînement (6), dans lequel l'élément de verrouillage (64) est agencé pour se déplacer entre une position de non-verrouillage dans laquelle la partie entraînée (8) peut tourner par rapport à la partie d'entraînement (6), et une position de verrouillage dans laquelle la partie d'entraînement (6) est verrouillée pour tourner avec la partie entraînée (8).

13. L'accouplement à un tour de la revendication 12, dans lequel l'élément de verrouillage (64) est monté sur un élément parmi la partie entraînée (8) et la partie d'entraînement (6), et l'autre de la partie entraînée (8) et de la partie d'entraînement (6) inclut une formation de verrouillage (66), telle qu'un évidement, qui est agencée pour recevoir l'élément de verrouillage (64).

14. L'accouplement à un tour de l'une quelconque des revendications 10 à 13, incluant un moyen de sollicitation, tel qu'un élément élastique (69), pour solliciter l'élément de verrouillage (64) vers la position de verrouillage.

15. L'accouplement à un tour de l'une quelconque des revendications 10 à 14, dans lequel l'élément de verrouillage (64) comprend une broche rétractable.

16. L'accouplement à un tour de l'une quelconque des revendications précédentes, dans lequel l'élément de commande (10) est mobile en translation.

17. L'accouplement à un tour de la revendication 16, dans lequel l'accouplement (2) est désengagé en déplaçant l'un de la partie entraînée (8) et de la partie d'entraînement (8) par translation de l'autre de la partie entraînée (8) et de la partie d'entraînement (6) et dans lequel l'élément de commande (10) se déplace simultanément avec l'un de la partie entraînée (8) et de la partie d'entraînement (6).

18. L'accouplement à un tour de l'une quelconque des revendications précédentes, dans lequel des surfaces de contact coopérantes (76, 78) de la formation de désaccouplement (54) et de la came (52) incluent des surfaces hélicoïdales, afin d'assurer un contact surface à surface entre les surfaces de contact coopérantes (76, 78) de la formation de désaccouplement et la came pendant la procédure de désengagement de la partie entraînée (8) de la partie d'entraînement (6).

19. L'accouplement à un tour de l'une quelconque des revendications précédentes, dans lequel un élément parmi la partie d'entraînement (6) et la partie entraînée (8) comprend la formation de désaccouplement (54) et dans un état dans lequel l'accouplement à un tour (2) est désengagé, l'autre élément parmi la partie d'entraînement (6) et la partie entraînée (8) est agencé pour s'écarter/s'éloigner de la partie avec la formation de désaccouplement (54).

20. L'accouplement à un tour de l'une quelconque des revendications précédentes, dans lequel la partie d'entraînement (6) et la partie entraînée (8) ont des agencements irréguliers, de sorte que la partie d'entraînement (6) et la partie entraînée (8) s'engagent par entraînement dans une seule orientation de rotation de la partie d'entraînement (6) et de la partie entraînée (8), et la partie entraînée (8) est sollicitée vers la partie d'entraînement (6) et est agencée pour s'engager automatiquement par entraînement avec la partie d'entraînement (6) dans un état dans lequel l'orientation de rotation de la partie d'entraînement (6) et de la partie entraînée (8) se produit.

21. L'accouplement à un tour selon l'une quelconque des revendications précédentes, destiné à être utilisé dans une presse à balles (100) pour accoupler un train d'entraînement, moyennant quoi la partie d'entraînement (6) est reliée par entraînement à une source d'énergie et la partie entraînée (8) est reliée par entraînement à une partie fonctionnelle de la presse à balles, dans lequel dans un état dans lequel le cliquet (10) s'engage avec la formation de désaccouplement (54), un élément parmi la partie d'entraînement (6) et la partie entraînée (8) est écarté de l'autre pour désengager le train d'entraînement.

22. Une presse à balles carrée comprenant une chambre de compression (104), un piston alternatif (106) configuré pour comprimer le matériau de balle dans la chambre de compression (104) pour fabriquer une balle carrée, et un système d'alimentation (136) configuré pour alimenter le matériau de balle dans la chambre de compression (104), le système d'alimentation (136) comprenant un conduit d'alimentation (138) ayant une extrémité d'entrée (156) et une extrémité de sortie (158), une fourche d'alimentation (140) configurée pour effectuer une course de chargement pour pré-comprimer le matériau de balle dans le conduit d'alimentation (138) et une course d'alimentation pour transférer le matériau de balle du conduit d'alimentation (138) dans la chambre de compression (104), et un mécanisme d'entraînement (141) pour entraîner le mouvement de la fourche d'alimentation (140), le mécanisme d'entraînement (141) incluant un accouplement à un tour (2) selon l'une quelconque des revendications précédentes.

23. Un procédé pour faire fonctionner une presse à balles agricole (100), le procédé incluant : la fourniture d'une presse à balles agricole (100) ayant une chambre de compression (104), un piston alternatif (106), et un système d'alimentation (136) comprenant un conduit d'alimentation (138) ayant une extrémité d'entrée (156) et une extrémité de sortie (158), une fourche d'alimentation (140), et un mécanisme d'entraînement (141) pour entraîner le mouvement de la fourche d'alimentation (140), le mécanisme d'entraînement (141) incluant un accouplement à un tour (2) selon l'une quelconque des revendications précédentes ; le mécanisme d'entraînement (141) faisant fonctionner la fourche d'alimentation (140) pour effectuer au moins une course de chargement pré-comprimant de ce fait le matériau de balle dans le conduit d'alimentation (138), tandis que la partie d'entraînement (6) de l'accouplement à un tour s'engage par entraînement avec la partie entraînée (8) ; le mécanisme d'entraînement (141) faisant fonctionner la fourche d'alimentation (140) pour effectuer une course d'alimentation transférant de ce fait le matériau de balle du conduit d'alimentation (138) dans la chambre de compression (104), tandis que la partie d'entraînement (6) est désengagée de la partie entraînée (8) ; comprimant le matériau de balle dans la chambre de compression (104) pour fabriquer une balle carrée.
